# EUROPEAN PATENT SPECIFICATION

(11) **EP 1 559 346 B1**
(45) Date of publication and mention of the grant of the patent: **14.06.2006**
(21) Application number: 05001695.5
(22) Date of filing: 27.01.2005
(51) Int. Cl.: A47B 96/02, A47B 47/02, F16B 9/02, B65G 1/02

(54) **Storage system and components used therefore**
Lagersystem und Komponenten dafür
Système de rangement ainsi que ses composants

(30) Priority: 28.01.2004 EP 04001833; 09.06.2004 EP 04013666
(43) Date of publication of application: 03.08.2005
(73) Proprietor: STOW INTERNATIONAL N.V., 7711 Dottignies (BE)
(72) Inventor: Vandemergel, Luc, 7711 Dottignies (BE)
(74) Representative: Winter, Brandl, Fürniss, Hübner Röss, Kaiser, Polte Partnerschaft Patent- und Rechtsanwaltskanzlei

(56) References cited:
- EP-A- 0 391 048
- EP-A- 0 882 660
- FR-A- 2 357 208
- US-A- 4 078 664
- US-A- 4 955 490

## Description

The invention relates to a storage system according to the preamble of claims 1 and 8, respectively, as well as to beams and depth profiles used therefore.

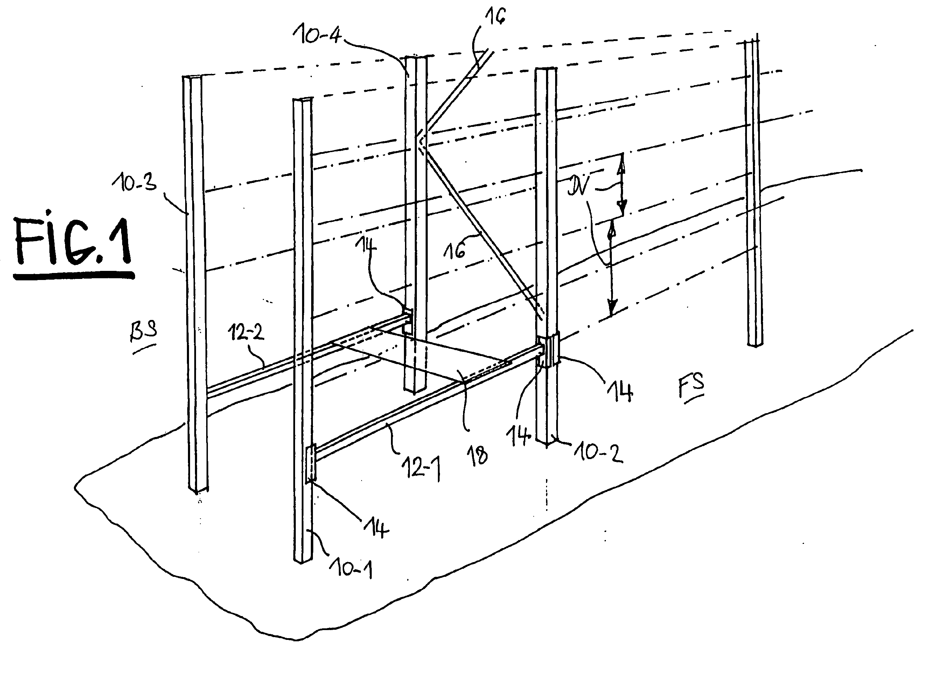

Such storage systems are well known in the art and in particular used in combination with automated storage and retrieval systems (AS/RS). An example of such system is schematically shown in figure 1 which is referred to in the following:

Such systems are in most cases assembled as a so-called multi-store systems consisting of a plurality of vertically extending frames 10 (standard wide-span or pallet-racking frames), wherein in a unit of four frames 10-1 to 10-4 arranged in a rectangle a plurality of pair of beams 12-1, 12-2 is provided which are staggered by predetermined distances DV in vertical direction and which interconnect each a pair of sidewardly adjacent frames 10-1, 10-2 and 10-3, 10-4. For connecting the beams and the frames angled flange profiles are fixed to the end faces of said beams. These flange profiles can be removably but firmly joined to corresponding projections of said frames. These projections - which are not shown in the figures - are provided in a specific pattern which is common to all frames so that the pair of beams 12-1, 12-2 can be hung into the corresponding frames 10-1, 10-2 and 10-3, 10-4, respectively, in horizontal alignment. The pattern for the projections at the frames defines the possible variation of segmentation of the storage face. This kind of mounting equipment is well-know in the art and will therefore not be described in more detail.

The storage system may have one entry side, e.g. the front side FS of figure 1, but can also be designed as a double-entry storage system in which the goods can be stored in and retrieved from the back side BS . In order to stiffen the structure, additional reinforcing bars 16 connect at least some of the front frames 10-2 with the corresponding back frames 10-4.

Corresponding horizontally aligned beams 12-1, 12-2 carry at least one, as a rule a plurality of depth profiles 18 which horizontally bridge the space between these beams and provide a support for goods to be stored. In Fig. 1 the depth profile is illustrated rather schematically as a flat component. However, in order to raise the bending strength with a minimum of material, those depth profiles as known in the art have a support surface and downwardly angled flanges, e.g. as shown in the prior art document DE 29614743 U1.

The design of the depth profiles depends on the field of use of the storage system, in particular on the dimensions of the totes or cartons to be stored in this storage system, on the type of crane handling system for automatically storing and retrieving the goods as well as on whether the totes or cartons are to be stored single or double deep.

In Fig. 2A to 2C examples of commonly used configurations of tote distributions on depth profiles are illustrated when assuming a storage of totes or cartons with loads varying from 10 to 50 kg/unit. It follows from those figures that not only the width W18 but also the lateral free space LFS between two adjacent cartons or totes - schematically illustrated with dotted lines and having reference numeral 20 - may vary within wide ranges. Therefore, the problem when designing a multi-store system of the above outlined type resides in that the system must be flexible for fulfilling the requirements given by the crane and tote handling device in all three coordinates and at the same time be structured such that the mounting thereof follows a single concept which provides a predetermined stability with the smallest possible space and material consumption. In this context, the system tolerances are very important and the mounting technique. To this end, it turned out that modern storage systems can only be competitive when the components can be precisely mounted with given narrow tolerances by requiring a minimum of mounting time.

In order to comply with such requirement in EP 0882660 B1 a storage system has become known in which the following components are provided:
- vertically extending frames (10-1 to 10-4),
- at least a pair of beams (12-1, 12-2; 112-1, 112-2) which horizontally interconnect a pair of sidewardly adjacent frames each and
- at least one depth profile (18; 118; 218) which is mountable to said pair of beams so as to horizontally bridge the space between these beams for providing a support for the goods to be stored, wherein
- said depth profile (18; 118; 218) has a support surface (24) and at least one downwardly angled flange (26; 126; 226) and is designed such that it is detachably mountable to said pair of beams (12-1, 12-2; 112-1, 112-2) by using exclusively the material of said depth profile and/or of said beams, the depth profile being lockable with said pair of beams by form fit engagement allowing a horizontal force coupling between said pair of beams.

The components of this system can be mounted with short installation periods since there is no need for any bolts or rivets for connecting the beams to the frames or the depth profiles to the beams, respectively. However, it turned out that in this known construction the depth profiles can only contribute to the strengthening of the stability of the storage system when the depth profiles are designed to project from the front of the storage system so that downwardly bent flanges can grip the beam. This affects the space which can be used in front of the storage system and which is needed for the automated storage and retrieval system. Moreover, a higher stiffness of the depth profiles or shelves, respectively, can only be reached by raising the height of the U-form center portion of the profile, thus consuming additional space which is needed for the crane and tote handling system. From FR 2357208 A1 (or corresponding DE 7621152 U1) a storage system according to the preamble of claim 1 has been proposed. The depth profiles are formed by essentially C-shaped sheet profiles. At both ends the downwardly angeled flanges have hook-like cutouts so that both angeled flanges can be vertically inserted into a pair of slits provided in a corresponding support surface of the beams. By this, the depth profiles can only be mounted by a vertical insertion movement and cannot be locked in vertical direction.

Therefore, it is the object underlying the present invention to provide a multi-store system, in particular for use with an automated storage and retrieval system handling unit loads of 10 to 25 kg, which provides increased flexibility to handle different types of crane handling systems and different types of totes or cartons with an optimised storage capacity, with the additional advantage of improved stability to be reached with less installation time.

This object is achieved by a storage system with the features of claims 1 and 8, respectively. Specific compounds of this storage system, such as beams and depth profiles are the subject matter of independent claims 25 and 29, respectively.

According to the invention as defined by the system of claim 1 the depth profiles are still detachably mountable to said pair of beams by using exclusively the material of said depth profile and/or of said beams and the depth profile can be locked with said pair of beams - including vertical fixation - by form fit engagement allowing a horizontal force coupling between said pair of beams. Since the depth profile engages with its one end portion of its flange a slit-like recess in one of the beams in a hook-like manner it is possible to shorten the depth profile and at the same time provide a coupling which allows the transmission of horizontal forces between the pair of beams through the depth profile. The specific adaptation of the slit in the one beam and a hook-like designed first end portion of the downwardly angled flange of the depth profile combined with the locking principle for the other end portion, where a locking portion formed integrally with the depth profile can be bent into a corresponding recess of the other beam, allows an extremely easy and quick mounting of the depth profiles in the correct location by keeping precise and narrow tolerances, as the slits define the exact lateral position of the depth profiles. In addition, the depth profiles can be mounted from one side FS only without the need of having access from the other side just by hanging the hook-like designed end portions of flange(s) into the corresponding slit of the appertaining beam, by moving the depth profile into its final mounting position and by firmly locking the other end portion of the depth profile to the other beam just by applying a relatively small pressure force onto the locking portion thus securing the depth profile against any horizontal movement in the direction of its longitudinal extension. As there is a corresponding recess for the locking portion and the position of the locking portion is exactly defined with respect to the geometry of the depth profile and thus - by the interference with the slits - with respect to the pair of beams, the interference between the locking portion and the recess in the beam can be used for fine positioning of the depth profile. By this, narrower tolerances can be kept. The installation still does not require any separate fastening means like bolts or rivets.

Claims 2 and 3 are directed to alternatives for the location of the slit like recess in one of the beams. A specifically advantageous embodiment is provided with the design of claim 3 since such corner portion can be seen when mounting the depth profile so that the installation process is simplified. Moreover, using the corner portion for such engagement automatically provides an opening with a width that is different when seen from different angles. This allows a smooth insertion of an end portion of a flange of the depth profile in a first direction. Upon tilting the depth profile in a different plane this end portion is securely caught in said slit.

Preferably - as outlined in claim 4 - the depth profile is engageable with said other beam of said pair of beams through the other end portion () of said flange again by interacting with a vertical slit which is formed into the beam at its corner portion which faces the other beam. This design is advantageous as it further improves the mounting accuracy. Moreover, it allows a further shortening of the depth profiles.

With the specific features of claim 5 the depth profile can be easily secured against vertical movements without complicating the mounting or installation process. Thus, upon completing the mounting of the depth profile not only their lateral but also their vertical position is fixed within narrow tolerances.

With the embodiment of claim 6 the installation process can be further simplified by using a face of a cut out portion in the flange of the depth profile for its positioning in the final mounting position.

The above object is also achieved by the features of claim 8 which define an independent invention. However, these features can also be used in combination with the subject matter of any of the claims 1 to 7. The concept of the subject matter of claim 8 is in particular advantageous since it allows maximising the available storage space between two vertically adjacent beams. In detail, by this design the slit in the depth profile can be used for its exact positioning with respect to the beams with respect to three axes. At the same time, however, it allows that the depth profile is formed such that in the final mounting position it does not project above the upper edge of the beam at the entry side of the storage system. This is not only important for smoothening the automated storage and retrieval work to be done by conventional systems but also with respect to the maximization of the storage capacity.

When the storage system is applied for use with a single entry, it is advantageous to design the beams in line with claim 9. This provides an automatic stop for the totes or goods or cartons to be stored in the storage system.

When used in combination with a double entry the embodiment of claim 10 has specific advantages in terms of a simplified manufacturing process for the beams.

A particular advantage of the present invention is to be seen that the design of the lateral downward angled flanges can be used not only for vertical and lateral precise positioning of the depth profile but also for enhancing the overall strength of the storage system. This is achieved by fixing the depth profile at least within the slits of one of the beams such that the depth profile can transmit a force from one beam to the other. Therefore, when handling the goods on the depth profile by shifting the friction forces can be transmitted to the pair of beams whereby excessive deflections of the storage system can be reduced. This, in turn, allows the use of highly sophisticated automated storage and retrieval systems which require most exact positionings.

A rather simple design of the depth profile allowing the above multiple function is the subject matter of claims 11 to 13.

When the depth profile is symmetrical with respect to a center plane which in the mounted position is orthogonal to said pair of beams there is the advantageous effect that depth profiles to be mounted on both ends of the beams adjacent to the frames can be easily manufactured just by cutting the depth profiles into two pieces.

When the depth profile has a cross section in line with claim 15 it provides excellent stability whilst having the advantage of being integrated within the storage system in a space saving manner. Namely, the depth profile with its lateral portions projects only by a small measure - which is given by the position of the horizontal slit and which essentially corresponds to the depth of its depression in the center - from the upper side of the support surface of the respective beam. It turned out that a depth of the depression in a range of only 4 to 6 mm is enough to provide sufficient stiffness for the totes to be stored.

The strength of the depth profile can be easily controlled by the measures of claim 16 without affecting the functionalities described above.

It also turned out that the above functions of the beams can be easily met even when designing the cross section in line with claim 17, which allows to keep the prescribed from tolerances even when the depth profiles are asymmetrically loaded. In detail, as the cross sections of the beams have their shear center close to a plane of the resulting support force acting on said depth profile, they do not undergo any substantial torsion movement. This is also advantageous with respect to the interaction between depth profiles and beams since excessive forces acting on any functional parts can be controlled. This, in turn, allows the components to be re-used again and again when assembling different storage systems therefore from time to time.

A very effective way of securing the depth profile to the beam is the subject matter of claim 17. Moreover, it allows a simple manufacturing process of the depth profile.

When - in line with claim 19 - the material tongue is geometrically adapted to the recess in said beam it can be effectively used for providing a firm connection to the beam. The material tongue can be basically used in two different ways: if it will be bent down by less than 90°, preferably only by 15 to 40°only, it serves as a stop for horizontal movement of the depth profile. If, however, it will be bent down for more than 90° it can additionally serve to counteract vertical movement of the depth profile. This letter way of use is advantageous when the depth profile having only one lateral downward angled flange is used.

The embodiment of claim 20 allows an easy disassembling of the depth profile as the tool can be applied from above which simplifies the handling of the tool.

When manufacturing the depth's profiles adjacent the lateral frames in line with claim 22 it is possible to use a single type of depth's profile for the whole storage system. On the other hand, this way of manufacting these lateral depth's profiles has as a consequence that a sufficient stability of said depth's profiles must be provided by additional measures.

An advantageous embodiment which provides improved stability while keeping the mounting process uniform for all depth's profiles in the system is the subject matter of claims 23 and 24. This embodiment very much simplifies the fixing of the depth's profiles adjacent to the frames. It is no longer necessary to manipulate any material tongues or locking portions at positions which are not so easily accessable. Moreover, the overall stability of the depth's profiles is increased. The cost induced by these measures can be kept reasonable since as a rule in such storage systems anyhow depth's profiles of different width can be used so as for the manufacturing of the lateral depth's profiles it is only necessary to use a bending tool which is regularly used for manufacting depth's profiles of the next wider version. For example, if depth's profiles in the storage system have a width of 130 mm, the depth's profiles adjacent to said frames are manufactured from a depth's profiles having a width of 170 mm.

Advantageous designs of particular components of the storage system are defined in claims 25 to 28 for the beams and in claims 29 to 34 for the depth profile. It is to be noted that the design of these components should be protected as such independently from the complete storage system as a separate inventive idea.

The specific advantage of the beam of claim 25 or 26 lies in that it can be manufactured with bending machines in which steel sheets are transformed by being continuously processed through a series of bending tools.

Also a depth profile according to one of the claims 29 to 34 can be manufactured exclusively by punching and bending processes of metal sheets so that the manufacturing process can be done in conventional manufacturing plants of such components.

Advantageous further embodiments are the subject matter of the remaining sub-claims.

In the following by way of example - some embodiments of the invention are described in more detail. In the drawings:
figure 3 is a perspective view of a pair of horizontally aligned beams of a storage system into which depth profiles are to be mounted;
figure 3A is the detail "IIIA" in figure 3 with removed flange profile;
figure 4 is a schematic side view of the arrangement of figure 3 showing the depth profile in a first mounting phase;
figure 5 is the detailed view "V" in figure 4;
figure 6 is a schematic side view similar to that of figure 4 and showing the depth profile in a final mounting phase;
figures 7 and 8 are the details "VII" and "VIII" of figure 6;
figures 9 and 10 are cross sections of the beams which are used in the embodiment of figure 3;
figure 11 is a perspective view of the front beam as used in the embodiment of figure 3, the flange profiles being omitted;
figures 12 and 13 are detail views of parts "12" and "13" in figure 11;
figure 14 is a perspective view of a depth profile as used in the embodiment of figure 3;
figures 15 to 17 are the details "15", "16" and "17" of figure 14;
figure 18 is a perspective view of the depth profile when fully mounted to the front beam;
figure 19 is a cross section in a plain "XIX"-"XIX" in figure 18;
figure 20 is a detailed view when looking in the arrow "XX" in figure 16;
figure 21 is an enlarged view along arrow "XXI" in figure 18;
figure 22 is a perspective view - similar to figure 18 - of an end portion of a modified depth profile when fully mounted to the front beam;
figure 23 is a cross section of "XXIII"-"XXIII" in figure 22;
figures 24 and 25 are detailed views with looking directions "XXIV" and "XXV" in figure 14;
figure 26 is a perspective view - similar to that of figure 3 - of a modified portion of the storage system to be used as a double entry system;
figure 27 is a schematic side view of the arrangement of figure 26 showing the depth profile in a first mounting phase;
figure 28 is the detailed view "XXVIII" in figure 27;
figure 29 is an enlarged schematic side view similar to that of figures 7 and 8 and showing the depth profile in a final mounting phase;
figure 30 is a perspective view of detail "XXX" in figure 26 of the depth profile into which a stopper member is to be removably inserted;
figure 31 is a view of the stopper member of figure 30 when viewed from below;
figure 32 is the view of "XXXII" in figure 31;
figure 33 is the cross section "XXXIII"-"XXXIII" of figure 32;
figure 34 is a perspective view of a further modification of a depth profile designed as a shelve;
figure 35 is the detail "XXXV" of figure 34;
figure 36 is the detail when seen in the direction of arrow "XXXVI" of figure 34.
figure 37 is a cross section of a wider depth profile mounted as a regular depth profile.
figure 38 is a cross section of one half of the wider depth profile mounted as a lateral depth profile adjacent to the frames;
figures 39a and 39b are cross sections in a plain "XXXIX"-"XXXIX" in figure 38 of two possible embodiments of the end portion of the lateral depth profile (without the beam);
figure 40 is a perspective view of the lateral depth profile;
figure 41 is a top view of the lateral depth profile; and
figure 42 shows the mounting of the lateral depth profile and four detail views of its end portions engaged with the beams.

In figure 3 by way of example only one level unit of a storage system is shown. This storage system is designed as a single or double deep, single entry system.

The beams 12-1, 12-2 to be secured to the - not shown - frames (which can be conventional STOW Pal-rack or STOW Midi-Rack frames) carry again angled flange profiles 14 which are preferably welded to the respective faces. The fixing technique for the beams is well known in the art so that a detailed description can be omitted. However, it is important to note that the design of the flange profiles 14 - allows the positioning of the beams 12-1, 12-2 in a plurality of height levels which are predetermined by the location of the counter fixing means at the frames. This provides adjustability in height which is defined by the vertical shift distance VSD of the pattern of perforations 22 in the flange profiles 14.

In principle, it is possible to select the measure VSD from case to case when designing the storage system according to the individual needs. However, it is advantageous to use a fixed measure VSD, e.g. 50 mm, for a complete storage program and to individually adjust the vertical distances DV (see figure 1) between two layers by varying the position of the flange profile in vertical direction.

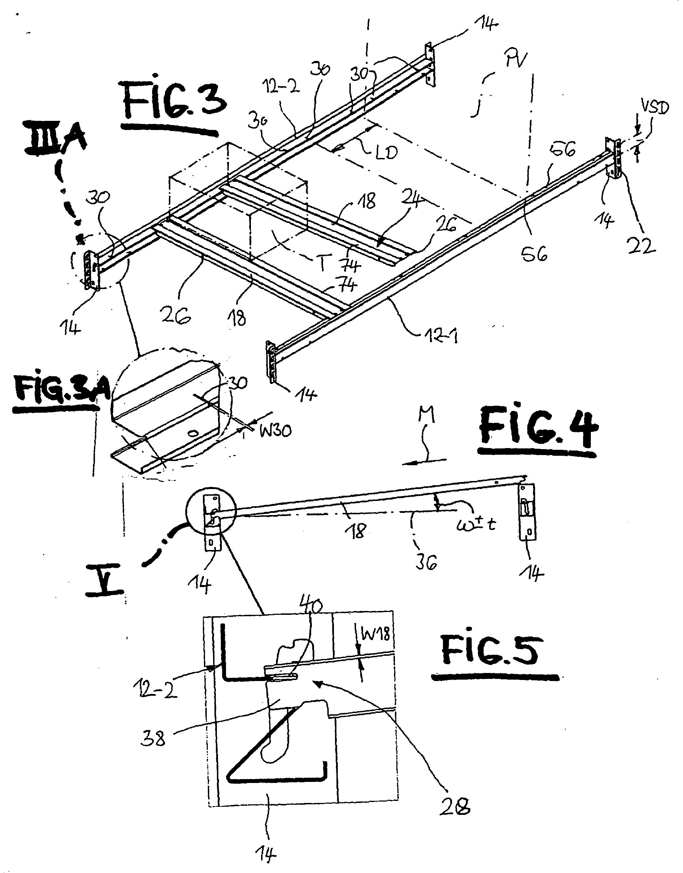

Reference numerals 18 denote depth profiles which are mounted to the pair of beams 12-1, 12-2 so as to horizontally bridge the space between these beams in order to provide a support for the goods to be stored, e.g. a tote T or carton which is shown in figure 3 with a dot-dashed line. The depth profile 18 has a support surface 24 and at least one downwardly angled flange 26 and it is designed such that it is detachably mountable to said pair of beams 12-1, 12-2 by using exclusively the material of said depth profile and/or of said beams. This will be described in more detail with reference to figures 4 to 25.

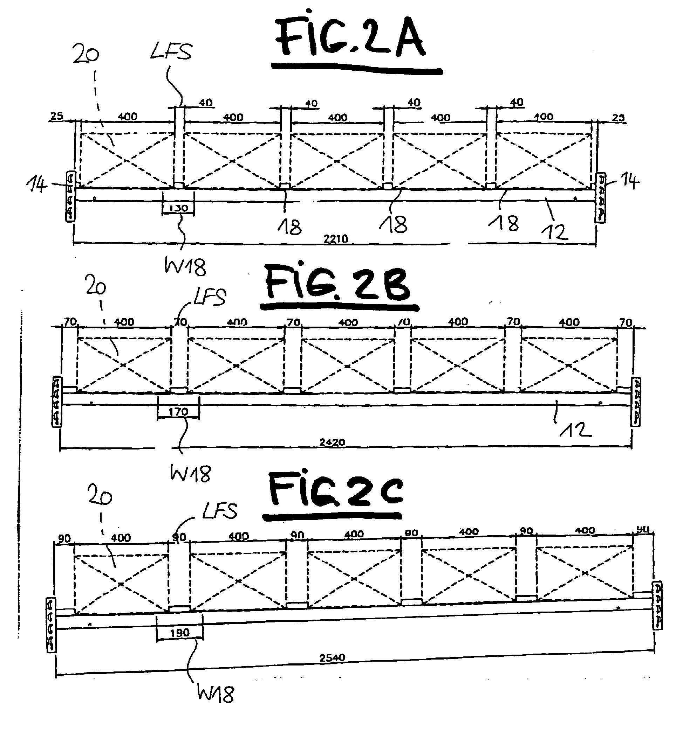

As can be seen from figures 5 and 7 the depth profile 18 engages with its one end portion 28 of its flange 26 in a hook-like manner a corresponding slit 30 in the beam 12-2 such that there is a lateral form-fit engagement between end portion 28 and slit 30. With other words, the width W30 of the slit 30 is slightly greater than the wall thickness W18 (see figure 5) of the depth profile 18 which is made from metal sheet. For a wall thickness W18 of 1,5 mm the width W30 of the slit 30 can be chosen as 2,5 mm.

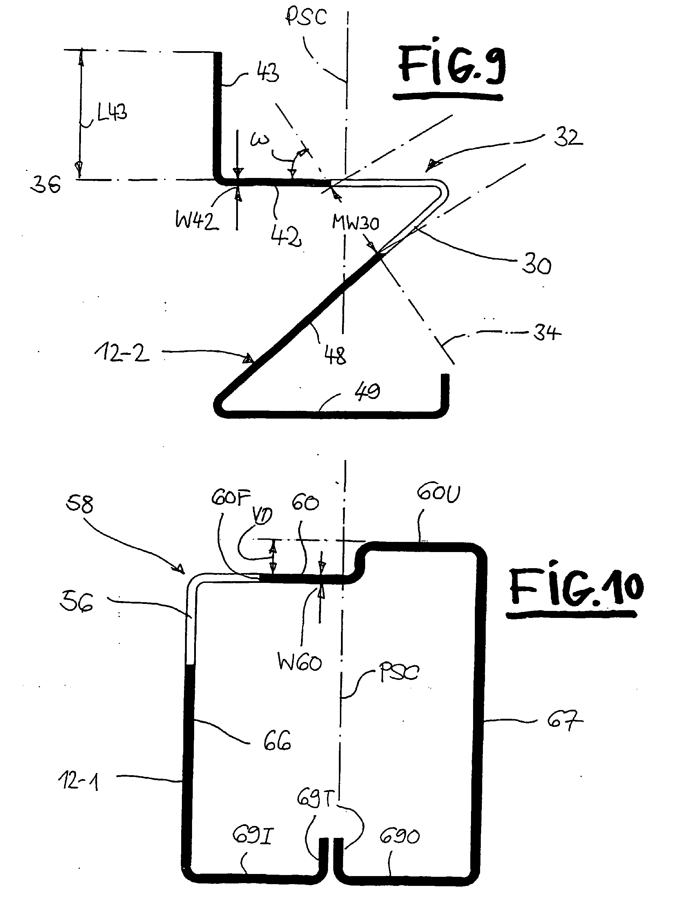

Since the slit 30 is formed in the area of a corner portion 32 of the beam profile 12-2 the maximum width MW30 lies in a plane 34 which is oblique by a specific acute angle w with respect to a horizontal plane (see figure 9). This geometry is used for the specific mounting process:

In detail, the end portion 28 of the flange 18 has a widened head portion 38 which is adjacent to an essentially horizontal slit 40 (see figures 5, 7, 16 and 20) and which is fittingly insertable into said vertical slit 30 of the beam 12-2 only in an orientation which is tilted by an acute angle of w +- a tolerance angle t with respect to the horizontal plane 36. This is shown in figures 4 and 5 from which it becomes clear that in the tilted position the widened head portion 38 may smoothly be inserted into the vertical slit 30 by moving the depth profile 18 in the direction of arrow M. This is the first stage of the mounting procedure.

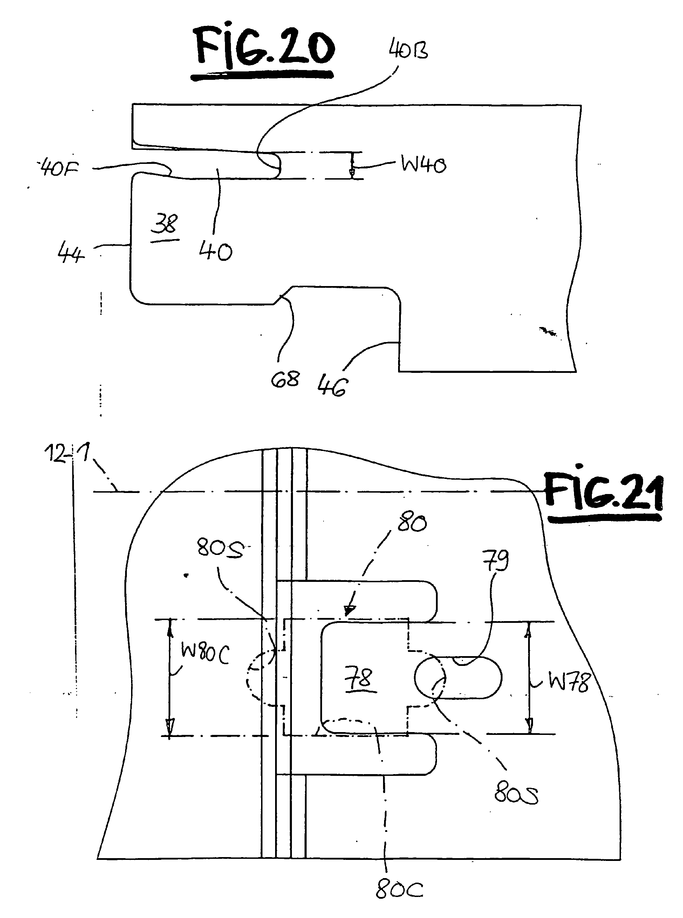

As can be also taken from the drawings, the essentially horizontal slit 40 which is adapted to cooperate with a horizontal leg 42 of the profile of the beam 12-2, has a form which allows the leg 42 to smoothly enter the slit 40 upon insertion of the end portion 28 into the vertical slit 30. To this end the slit 40 - as shown in greater detail figure 20 - has a width W40 which is greater than the thickness W42 of the profile leg 42, i.e. the wall thickness of the beam profile. For example with a thickness of the beam profile of 2 mm the measure W42 is in the range of 2,8 mm. Moreover, as shown in figures 16 and 20 - the slit 40 angles somewhat upwards in the direction of its back face 44 so that in the first mounting phase of the depth profile 18 (shown in figure 4) a front portion 40F of the slit 40 runs essentially parallel with the leg 42 of the beam profile 12-2.

When the widened head portion 38 has passed the bottleneck of the vertical slit 30 by moving the depth profile in the direction of arrow M the depth profile 12-2 can be brought down into an almost horizontal orientation and may be shifted further on until a bottom 40B and or a shoulder 46 abuts with the material of the depth profile 12-2, i.e. with a face 42F of the leg 42 or an oblique leg 48, respectively.

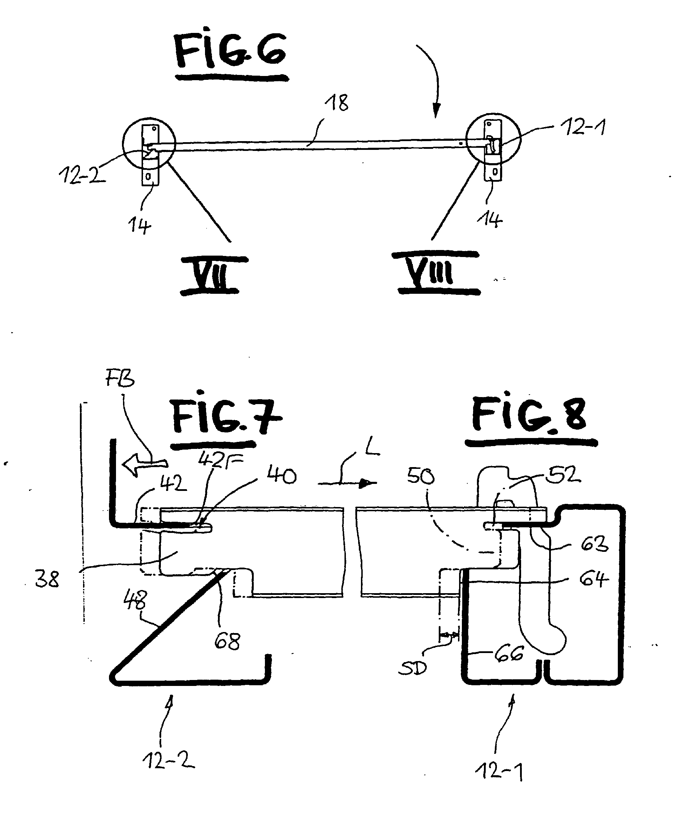

In this situation - which is shown in figures 7 and 8 by dash-dotted lines - the depth profile 12-2 can be brought in a completely horizontal orientation so that a nose 50 underneath a horizontal slit 52 in the other end portion 54 of the angled flange 26 can freely enter a corresponding vertical slit 56 - as can be best seen from figure 12 and which lies in a common vertical plane PV with the corresponding vertical slit 30 in the beam 12-2, as illustrated with das-dotted lines in figure 3 - in a corner portion 58 of the beam 12-1. In this mounting stage the depth profile 18 comes into an abutting contact with the beam 12-1 so that the depth profile 18 is maintained in the horizontally orientated position in which the slit 52 is in alignment with a leg 60 of the beam profile 12-1. Consequently, and in view of the dimension of the slit 52 whose vertical width W52 is again greater than the thickness W60 of the leg 60 of the beam profile, the depth profile 18 can be shifted in the direction of the arrow L for preparing the locking of the depth profile 18 at the beams 12-1, 12-2.

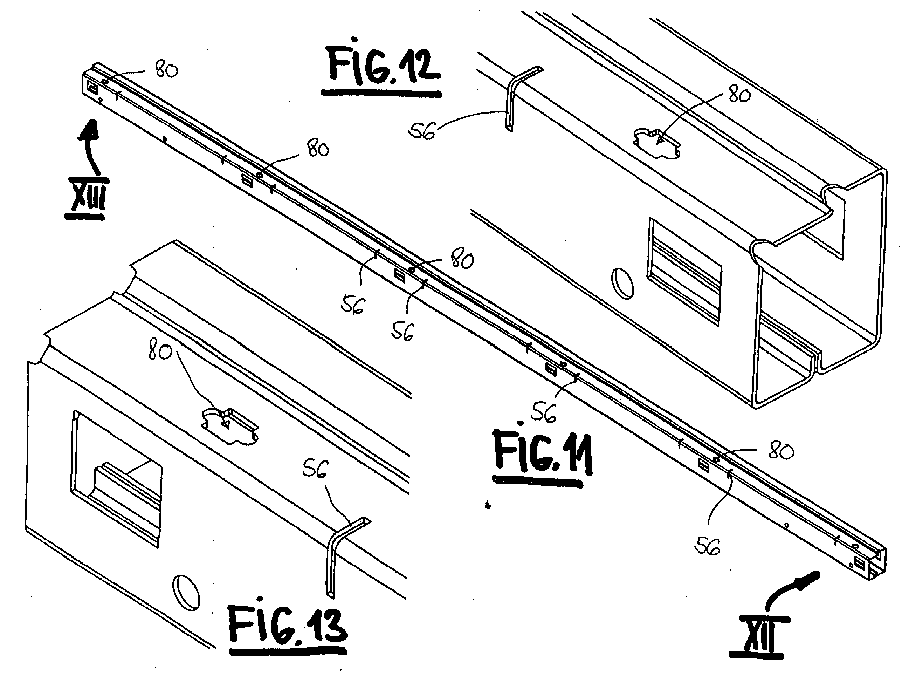

Preferably, the depth profile 18 is shifted by a distance SD (see figure 8) so that a predetermined abutting position can be reached in which the profile of both beams 12-1 and 12-2 are caught with the horizontal slits 40, 52. Preferably, the decisive surface for defining this abutting position is a bottom face 62 of the slit 52 which comes into contact with an inner face 60F (see figure 10) of the slit 56 in the profile leg 60.

As can be taken from figure 7 and 8, in this abutment position a vertically extending face comes close to a vertical leg 66 of the beam profile 12-1. At the same time a shoulder 68 nearly contacts the obliquely running leg 48 of the beam profile 12-2. This geometric configuration makes sure that the depth profile 18 upon complete locking with the beam 12-1 - as later on described - is able to transmit tension forces from beam 12-1.

When the depth profile 18 is in the position as illustrated by the through going lines in figures 7 and 8 it can no longer be lifted away from the beams 12-1, 12-2. For completely locking the depth profile 18 the following procedure applies:

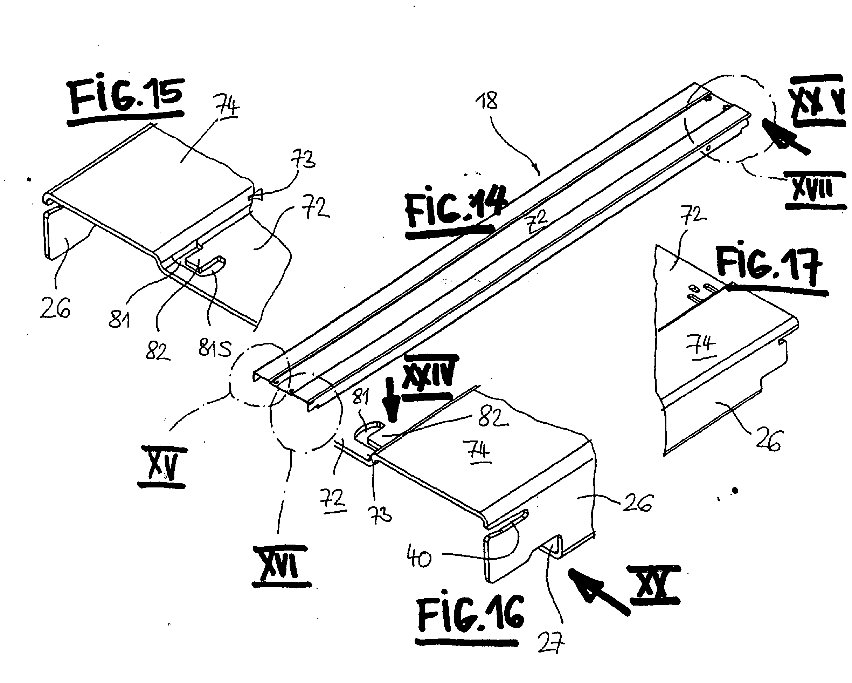

As shown in detail in figures 14 to 19, the depth profile 18 has a cross section essentially in the form of a preferably flat "U" in which the two vertical extending angled flanges 26 are bent down from a main leg 70 which bridges the two flanges 26 and which has a slightly depressed center portion 72 by which the depth profile 18 contacts via an enlarged area the upper side of the respective beam 12-1, 12-2. With other words, the center portion 72 forms the force transmitting surface of the depth profile 18 and it continues via an upward orientated step 73 into again horizontal support portions 74 which support the goods T to be stored.

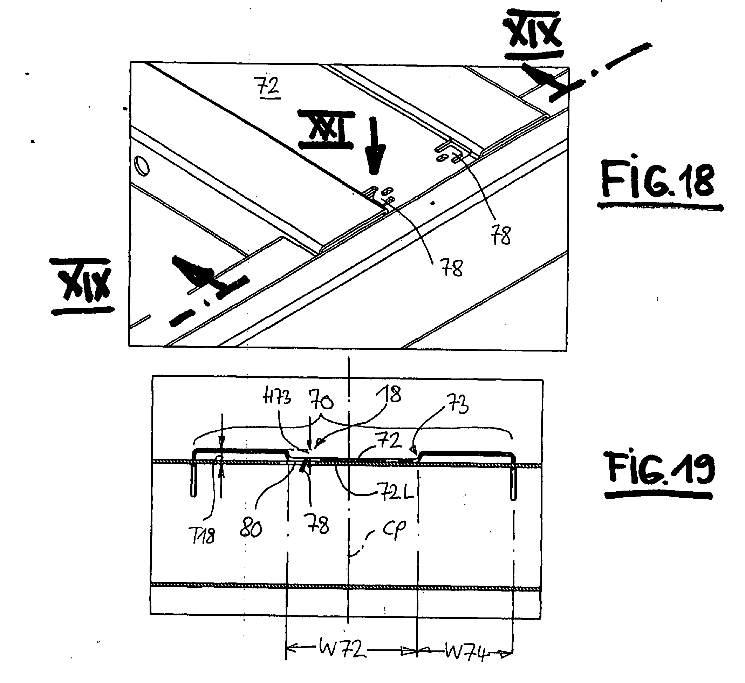

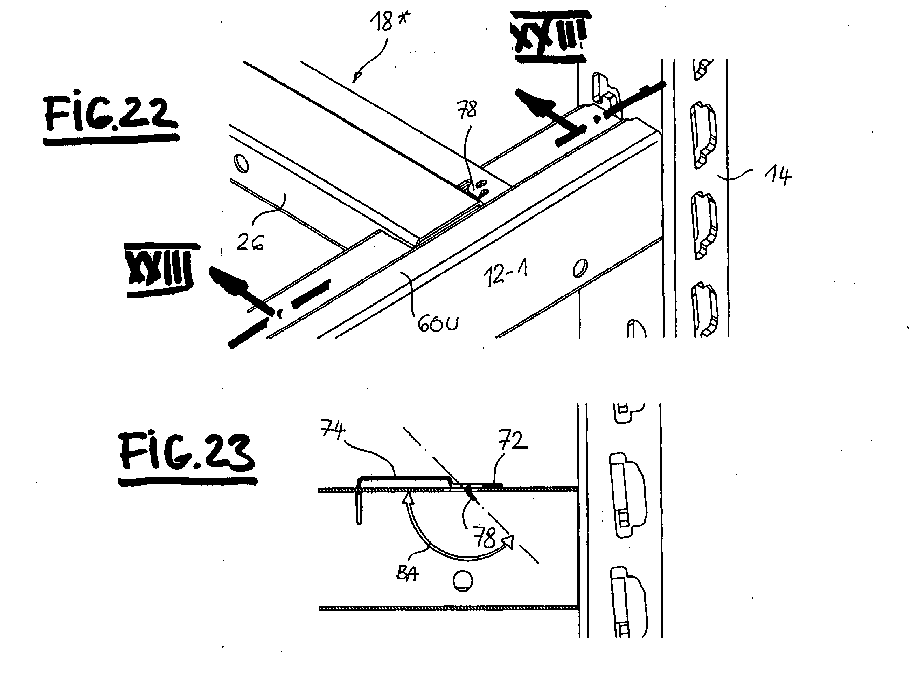

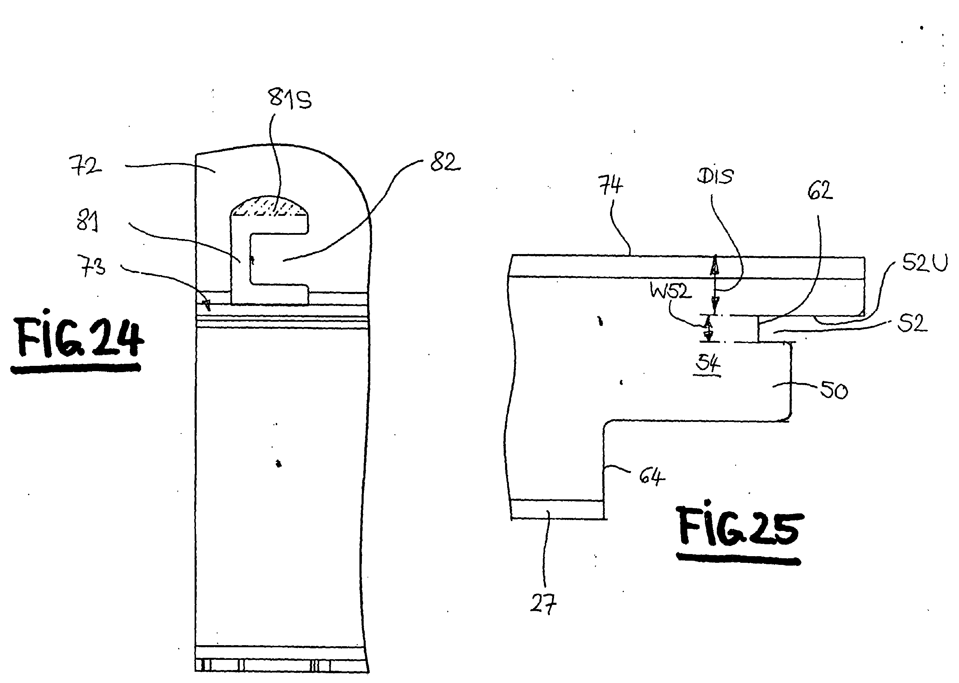

As can be best seen in figures 18 and 21 the depth profile 18 at its one end portion has at least one cut out or punched out part thus forming a locking tongue 78 which - in the final mounting position of the depth profile 18 as illustrated in figures 7 and 8 lies above a specifically designed recess 80 which is formed in the leg 60 of the beam profile. This is schematically illustrated by dash-dotted lines in figure 21.

The locking recess 80 has two axes of symmetry and it has a center part 80C in the form of a square and two lateral semi-circular recesses 80S. A lateral width W80C of the recess 80 is slightly larger than the lateral width W78 of the locking tongue 78 so that the latter can be bent down by a tool, such as a screw driver so as to reach a position as shown in figure 19. In this position the depth profile 18 is firmly connected to the beams 12-1, 12-2 so that it cannot move either in longitudinal, or lateral or vertical direction.

By this firm connection which is achieved without any additional fastening components the two beams 12-1, 12-2 are horizontally coupled via the depth profile 18 since for example - as can be explained best with reference to figures 7 and 8 - a backwards directed force FB acting on the beam profile 12-2 is transmitted through the contact between the leg 48 of the profile and shoulder 68 of the head portion 38 to the depth profile 18 and from there through the lateral faces of the locking tongue 78 to the beam profile 12-1. This allows enhancing the stability of the storage system even when using less material for its components.

Figure 18 shows that there are two locking tongues 78 provided at one end portion of the depth profile 18. This is due to the fact that it has turned out to be advantageous to design the depth profile 18 symmetric with respect to a vertical center plane CP - as can be seen from figure 19. The reasons for this are as follows:

As can be seen from figure 3, the totes T are supported by the support portions 74 of two adjacent depth profiles 18. This means that the geometry of cross section of the depth profile 18 is selected such that the width W72 of the center portion 72 is tailored to the space which the automated store and retrieval system requires. The width W74 of the support portions 74 is selected dependent on the goods to be stored. When the primary goods are cartons having less rigidity than totes the width W74 is preferably increased. The lateral distance LD between the vertical slits 30 (and 56) for adjacent depth profiles 18 is selected in compliance with the overall lateral dimension of the good T.

It follows from the above, that the invention allows tailoring individually the storage system to the specific storage requirements by adequately fixing the geometry of the depth profile 18 and by providing a specific pattern of slits 30, 56 in the beams 12-1, 12-2. Since the slits to be provided in the beams for receiving the depth profiles are minimized in size so that they cannot significantly affect the strength of the beams 12-1, 12-2 it is possible to equip the beams 12-1, 12-2 with a standard pattern of slits matching with the profile of the depth profile 18 but allowing an insertion of the depth profiles 18 with flexible lateral distances. Such standard beam is shown in figures 11 to 13 which is designed to carry five rows of totes or cartons T.

With this arrangement it is possible to quickly adjust the storage system to the specific store tasks and to work even with varying measures LD in one level of the storage system.

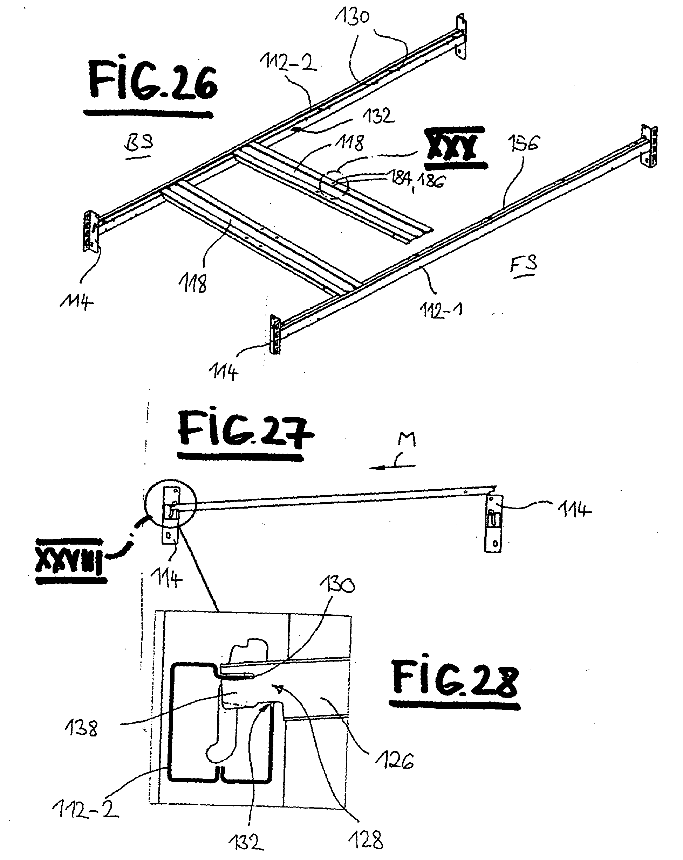

Another consequence form such design is that the outermost depth profiles which are neighbouring the frames 10-1, 10-2 and 10-3, 10-4 have to be designed differently, as can be seen from figures 22 and 23. In detail, these depth profiles are manufactured by cutting the above described depth profile - which is shown in figures 14 to 19 - into two pieces. Consequently, there is only one angled flange 26 available for engaging the slits 30 and 56 in the beams 12-2, 12-1. Therefore, in order to additionally stabilize the depth profile 18 in its final mounting position, the locking tongue 78 is bent down by an angle BA (see figure 23) which is greater than 90°.

As also on the side of the backward beam 12-2 one angled flange is missing for interacting with the beam profile, the center portion 72 of the depth profile 18 is equipped also at this end portion with a pair of fixing tongues 82 which are formed by a cut out or stamped out portion 81 of the metal sheet which is used for the depth profile. The location of such fixing tongues is adapted to the design of the beam profile 12-2 such that in the final mounting position of the depth profile the fixing tongue lies above a corresponding recess - not shown - in the appertaining beam 12-2 so that the fixing tongue may be bent down into a form fit engagement with that recess.

When the depth profiles 18 have to be removed from the beams 12-1, 12-2 it is only necessary to bend the locking tongues 78 and - if used - the fixing tongues 82 back essentially into their horizontal orientation. For facilitating this work by use of a simple tool, e.g. a screw driver, the cut out or stamped portion of the profile 18 is adapted such to the corresponding recess 80 underneath thereof that there remains enough space for inserting the tool and gripping the locking tongue. As can be seen from figure 21 such space is enlarged by providing the semi-circular recess extensions 80S.

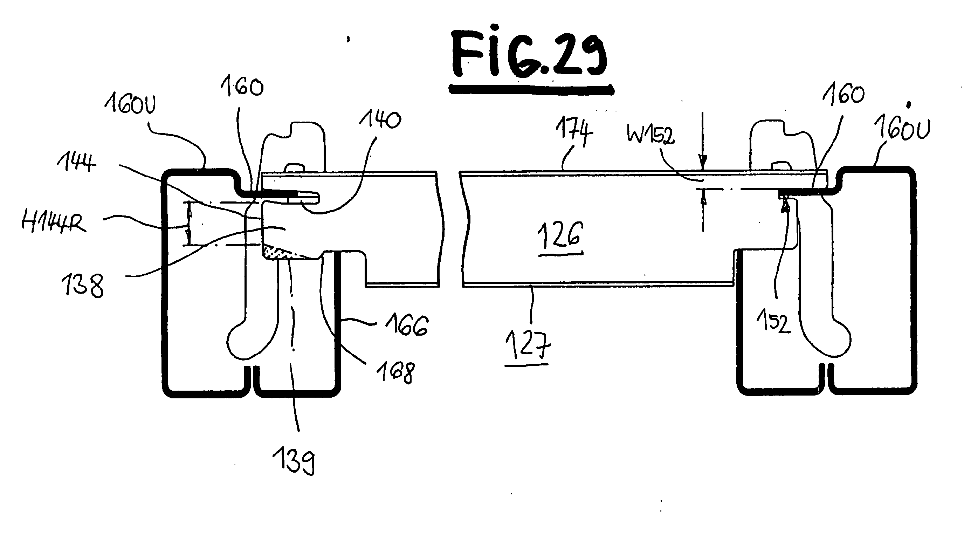

At the side of the fixing tongues 82 such space is available by a circular enlargement 81S - as indicated by a hatched area in figure 24 - still lying above a recess in the beam profile.

For bending back the locking tongue 78 from the position shown in figure 23 an additional hole 79 in the depth profile 18 is used. This hole 79 is positioned such that it overlaps the semicircular extension 80S of the recess 80 so that the tool may be inserted and can contact the material tongue 78.

As can be seen from the drawings, the components of the storage system are optimised also in terms of rigidity. This is performed by making use of multiple bent profiles preferably manufactured out of sheet metal. In order to additionally strengthen the depth profiles it is advantageous when the angled flanges 26 have an end portion 27 - as can be seen in figure 16 - each which is bent inwardly.

One specific peculiarity of the present invention is to be seen in that the enhanced strength of the components is combined with advantageous effects in terms of the handling friendliness of the storage system. In detail, as can be seen from the above referenced drawings, the front beams 12-1 are adapted such to the design of the depth profiles 18 that said depth profiles 18 are supported at their both ends on horizontal beam surfaces 42 and 63 which lie by a predetermined measure VD (as can be taken from figure 10 showing the beam profile) below an upper edge 60U of the beam 12-1 forming an entry of the storage system. This predetermined measure VD is preferably at least somewhat greater than a vertical distance DIS of the above described horizontal slit 52 from the uppermost surface 74 of the depth profile (see figure 25). With other words, the measure VD is not smaller that the height H73 of the step 73 in the support surface of the depth profile plus the thickness T18 of the metal sheet for such profile (see figure 19). With such design, the goods to be stored can freely enter the front side without being obstructed by any component of the storage system. Moreover, the vertical minimum distance of the beams can be reduced thereby raising the storage capacity.

When a storage system having a single entry is required - as shown in figures 3 to 25 - the front beams 12-1 are designed differently from the back beams 12-2. Both beams are optimised with respect to stability as follows:

The beam 12-2 at the entry side of the storage system has an essentially closed profile (see figure 10) with a stepped upper surface which is formed by profile legs 60 and 60U, two vertical legs 66 and 67 and two bottom legs 69I and 690 which at their respective end portions are angled somewhat upward and come into close contact with each other. This profile can be manufactured from metal sheet in continuously working bending units. Even though the profile is not closed the design is such that the shear center of the profile lies in a plane PSC (see figure 10) which is close to the plane where the external load is introduced. This ensures a torsion free bending behaviour of the profile.

The back beam 12-2 has a profile (see figure 9) essentially in the form of a "Z" wherein the upper horizontal leg 42 defines the support surface and continues in an upwardly bent rim portion 43 having a length L43 which is greater than the height VD of the step in the upper surface of the front beam at the entry side. This provides a stop for the goods when moved into the storage system.

By the design of the beam profile as shown in figure 9, in particular by bending the open profile in a Z-form having a bottom leg 49 whose end portion is bent upwardly, the shear center of this profile can be brought into a plane PSC which again is near the plane in which the external forces are introduced. This provides additional stability and simplifies the control of deflections within predetermined tolerance ranges.

For a storage system designed for unit loads of up to 25 kg excellent tolerances can be reached with wall thickness of the beam profiles of about 2 mm and with profile heights of about 60 mm for the front beam with a step of roughly 6 mm, and of about 54 mm for the back beam having a rim portion 43 with a height of 18 or 28 mm.

When a so-called double-entry storage system is required, the storage system is to be modified as shown in figures 26 to 33. For simplifying the description those parts which correspond to components which are similar to those as used in the above described embodiment are designated with similar reference numerals which, however, are headed by a "1". The storage system of figures 26 to 33 is a single deep, double entry system. It can also be designed, however, as a double deep system.

As can be best seen in figure 29, this type of storage system uses identical beam profiles for the beams 112-1 and 112-2 so that both beams have an essentially closed profile with a stepped upper surface consisting of profile legs 160U, 160 with a step in-between which is higher than the distance W152 of a horizontal slit 152 to the uppermost surface, i.e. the support surface 174 of the depth profile 118. This allows to store and to retrieve the goods (totes and/or cartons) by means of automated systems without interfering with edges or other profile parts of the depth profiles, even when the goods slide on the upper surfaces 160U of the beams 112-1, 112-2.

The depth profiles 118 are identical to those as used for the single entry storage system, except the design of the widened head portion 138. As indicated by the dash-dotted line in figure 29, this head portion 138 behind the chamfered shoulder 168 can be somewhat reduced in height by cutting away the hatched triangle so as to establish a reduced height H144R at its back face 144. This allows an easier and smoother insertion of the head portions 138 into the vertical slits 130 of the back beams 112-2 in the installation phase as shown in figures 27 and 28. By this modification the handling of the depth profiles 118 from one side of the storage system is further simplified, which allows to reduce the mounting costs.

The profile used for the beams 112-1, 112-2 is again selected such that it can be formed by a continuously bend forming process. The profile can be identical to that as shown in figure 10.

Since the double entry storage system allows access from both sides, i.e. front side FS and back side BS it is advantageous to equip the depth profiles 118 with a specific design for avoiding any unwanted interference of the storage and retrieval systems acting from different access sides FS and BS, respectively.

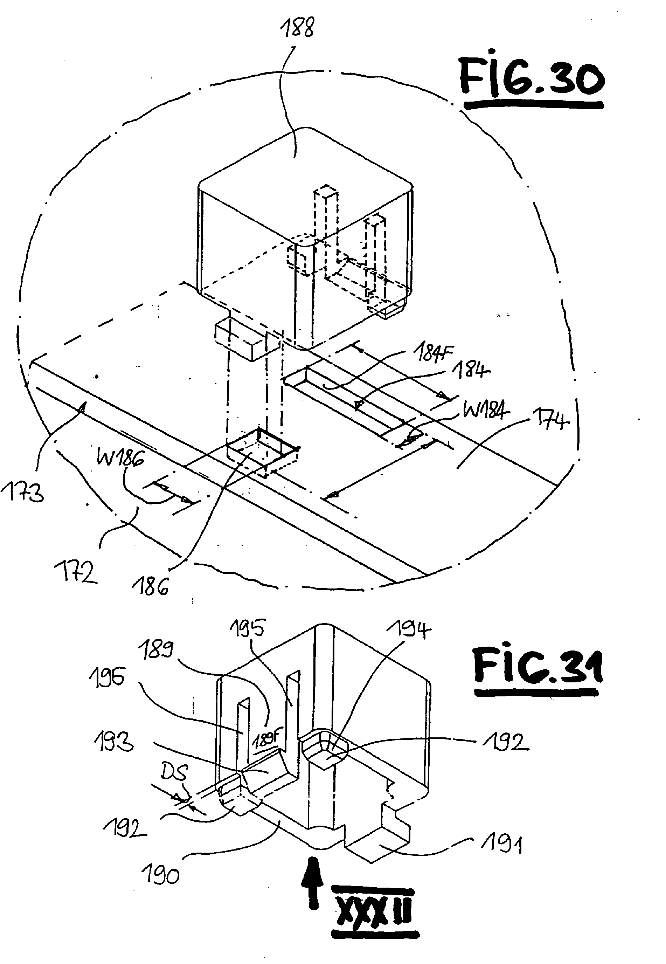

To solve this problem, the depth profile 118 - as can be taken in detail from figure 30 - is provided in its center area of its support portion 174 with two recesses 184, 186 coacting with a stopper element 188 which can be removably inserted therein.

The recesses 184, 186 have a rectangular shape and they are parallelly aligned in longitudinal direction of the depth profile 118. The longer recess 184 is closer to the lateral edge of the depth profile whereas the shorter recess 186 which may have even a square cross section is located adjacent to the step 173 in the profile 118.

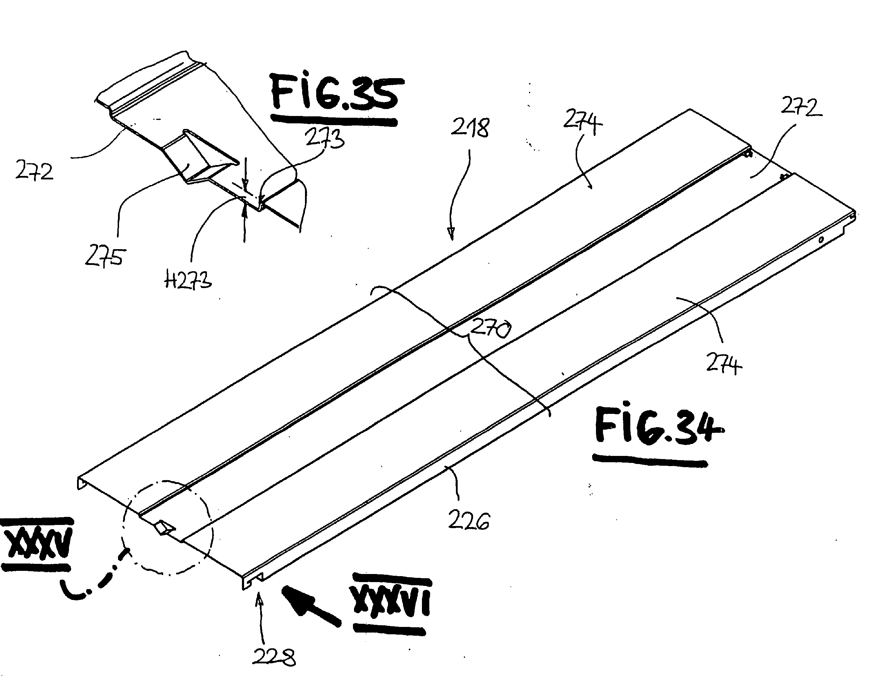

The stopper element 188 has the form of a substantially hollow cube having an open bottom with a base surface 190 having several protrusions 191 to 193. One protrusion 191 at the inner side has the form of a hook which can be inserted into the rectangular recess 186 of the depth profile 118 so that its shoulder 191S can abut the lower surface 174L of the depth profile 118. This can be best seen from figure 33 in which dash-dotted lines indicate the location of the metal sheet of the depth profile 118, i.e. of the support portion 174 when the stopper element 188 is in its fully mounted position.

Protrusions 192 which are located at the corners opposite to the hook-like protrusion 191 have the form of cubes which have a chamfered top portion 194 which simplifies the insertion of the stopper element 188 into the recess 184. The third protrusion 193 has again the form of a hook which is formed at the outermost end of a resilient tongue 189 of a wall portion of the stopper element 188. This resilient tongue 189 is formed by a pair of parallel extending slits 195 in the wall which is opposite to the hook-like protrusion 191. The protrusion 193 thus forms a resilient locking protrusion.

In the fully mounted position the base surface 190 entirely contacts the support portion 174 whilst the protrusions 192, 193 project into the elongated recess 184. The dimensions are selected as follows:

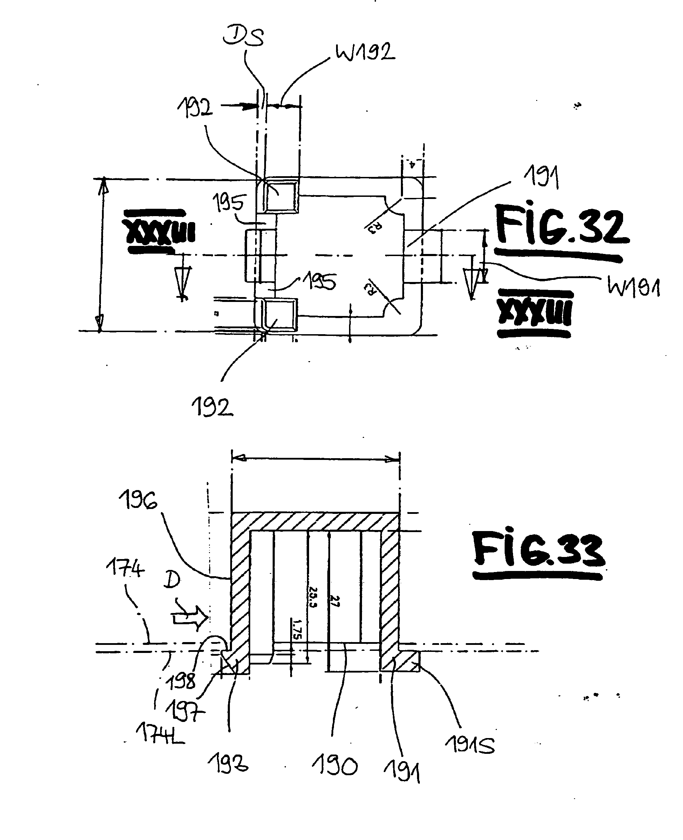

The width W192 of the positioning cubes 192 substantially corresponds to the width W184 of the recess 184 so that the positioning cubes can come into form fit engagement with the recess 184 the chamfered top portions 194 allowing a simplified mounting. The width W191 of the hook-like protrusion 191 is slightly smaller than the width W186 of the recess 186 so that the stopper element 188 can be correctly positioned in the recesses 184 and 186 of the depth profile 118. Since an outer face 196 of the stopper element 188 has a sidewise distance DS (see figures 31, 32) from the positioning cubes 192 the resilient locking protrusion 193 can only enter the center of the recess 184 while be slightly deflected in the arrow D of figure 33. This deflection is promoted by designing the locking protrusion 193 with a tapered head face 197. After the stopper element 188 having reached its fully mounted position with respect to the support portion 174, i.e. when a shoulder 198 of the locking protrusion 193 reaches the lower end of the recess 184, the locking protrusion 193 snaps outwards so as to resiliently press the resilient tongue 198, i.e. its outer face 198F against an inner surface 184F of the recess 184.

Figure 26 shows that there are recesses 184, 186 provided in order to mount four stopper elements 188 in the center portions of the depth profile 118. However, it is to be noted that it might be sufficient to provide only one stopper element 188 on each support portion 174, if the size of the stopper element 188 is selected adequately.

It should be noted that the design of the stopper element 188 and/or the adapted design of the recesses in the depth profiles is to be seen as additional, but individual inventions. The applicant preserves his rights to make the above described design the subject matter of own separate patent applications.

In the foregoing, embodiments have been described in which the depth profiles 18, 118 are mounted by inserting the remote sides of the depth profiles with their specifically designed end portions 28, 128 of the angled flanges 26, 126 into a vertical slit 30, 130 of a corner portion 32, 132 of the respective backside beam 12-2, 112-2. The depth profile 18, 118 is brought into the first phase of the mounting procedure in a tilted position with respect to the horizontal plane, and after the end portions 28, 128 have passed the opening of the slits it is swivelled back into the horizontal orientation and moved towards the front side beam 12-1, 112-1 so that the front side of the depth profile can be brought into engagement with the beam frofile there. In the following, a modified embodiment of the storage system is described in which the initial mounting steps are different from the described embodiments:

Again, for simplifying the description, elements which correspond to parts of the described embodiments are designated with similar reference numerals which, however, are headed by a "2".

Basically the design of the depth profile 218 differs from the depth profiles 18, 118 only with respect to the portion which co-operates with the backside beam profile 212-2 which is not illustrated in figure 34 but which can have the same profile cross section as the profile 12-2 or 112-2. However, instead of having vertical slits in corner portions of the profile, slits 230 are formed in the horizontal profile leg 242. This is illustrated in figure 36 in which dash-dotted lines show the position of the depth profile 218 with respect to the beam profile 212-2 when the depth profile 218 is in its fully mounted position. Again, the width of the slits 230 is somewhat larger than the thickness of the angled flanges 226, i.e. of the sheet metal which forms the basis therefore.

In the position shown in figure 36 the profile leg 242 has entered a horizontal slit 240 in the end portion 228 of the flange 226. Thus, the end portion 228 provides a hook-like head 238. As the length L238 of the hook-like head 238 is at least slightly smaller than the length L230 of the slit 230 the hook-like head 238 can be easily inserted into the slit 230 when it is positioned above the slit 230. This corresponds to an initial mounting phase. Again, there is no need to position the depth profile by separate handling measures at the back side of the storage system.

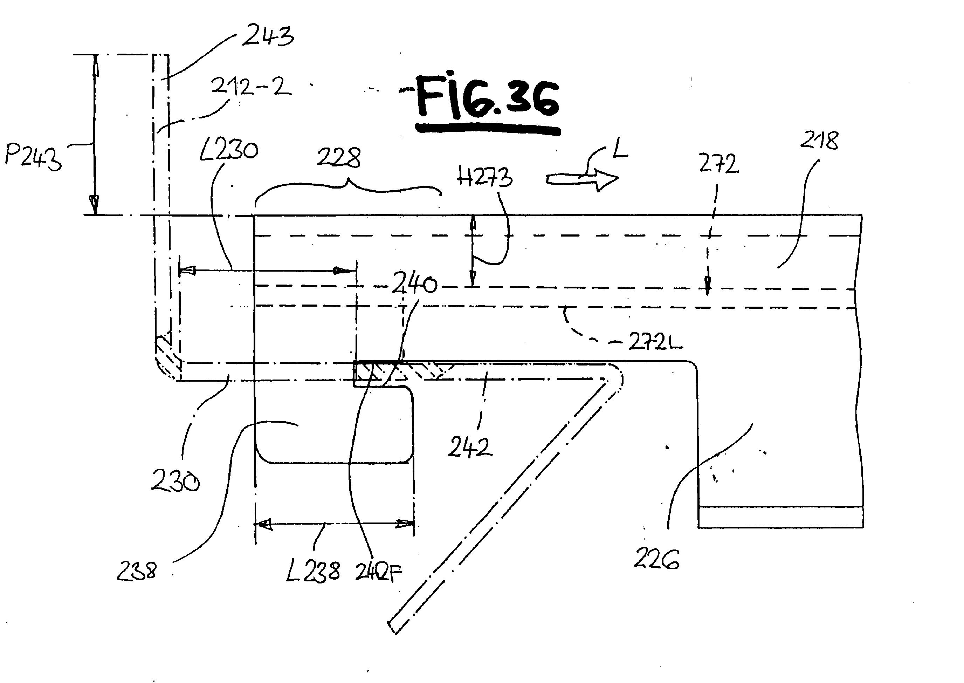

When correctly positioned, the hook-like heads 238 fall down into the slits 230 so that the latter comes into a position facing the horizontal leg 242 of the beam profile. This position is fixed by a specific design of the center portion 272 of the depth profile 218 as can be seen from figure 35.

There, a depression 275 is formed which is deep enough so as to contact the horizontal leg 242 of the beam profile 212-2 when an upper face 240F of the slit 240 approaches the profile leg 242. In this position, the opposite end portion of the depth profile 218 may be brought with its angled flanges 226 and its horizontal slits into alignment with the vertical slits and with the support legs of the other beam profile (not shown) so that the depth profile 218 can be moved in the direction of arrow L (see figure 36) so as to reach the final mounting position. The locking procedure fully corresponds to that as described with the other embodiments so that it can be omitted here.

In the above embodiment, the depression 275 is thus provided just for raising the level of the support portions 274 irrespective of the height H273 of the step 273 in the main leg 270 of the substantially U-form depth profile 218. By this, the measure P243 by which the rim portion 243 projects above the level of the support portions 274 can be selectively controlled.

It is to be noted, however, that such depression 275 can be omitted according to the individual needs of the overall design of the storage system. In such case, the horizontal slit 240 would be positioned such with respect to the upper edge of the support portions 274 that its distance is slightly smaller than the height H273 of the step 273 in the main profile leg 270. Consequently, upon gliding the head portions 238 into the slits 230 of the beam 212-2 the depth profile 218 falls down until the lower surface 272L of the center portion 272 of the profile contacts the leg 242 of the beam profile and the slit 240 faces this leg. In this position the depth profile 218 can be moved in the direction of the arrow L (figure 36) into its final mounting position, as described above.

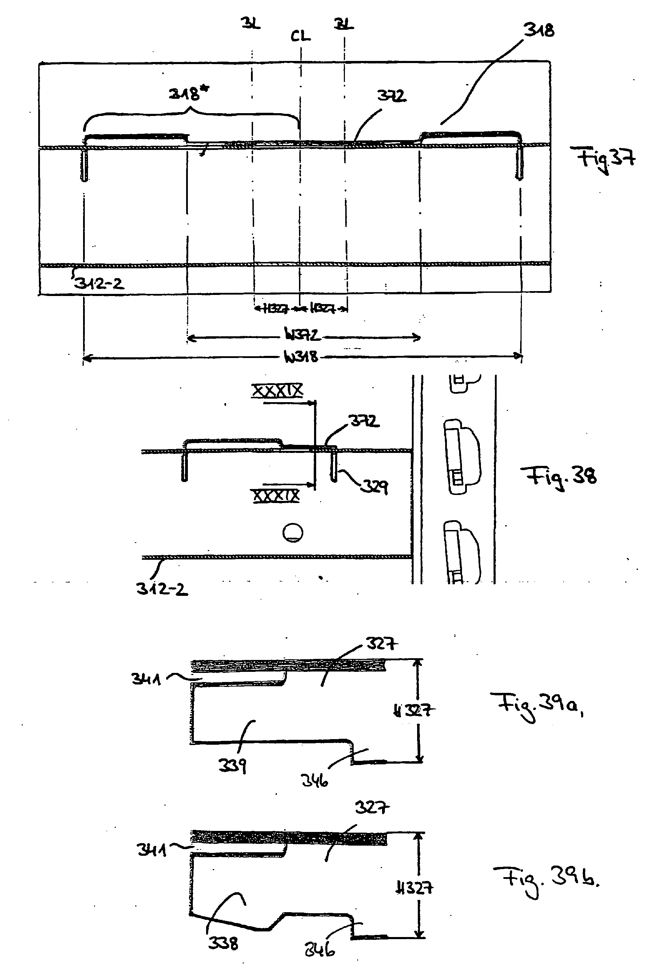

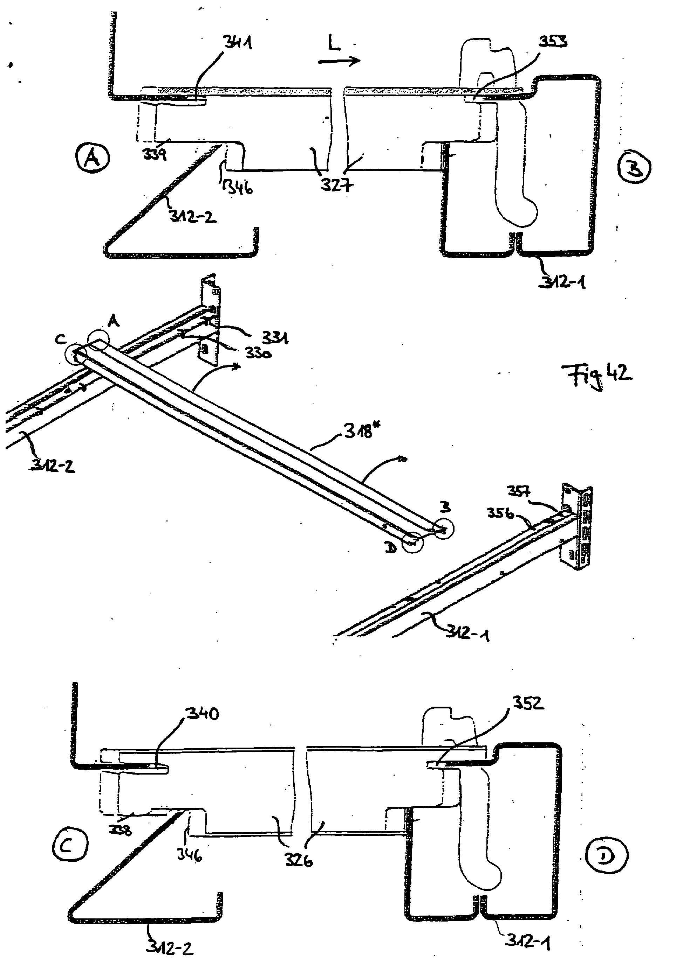

In the aforementioned embodiment the outermost depth profiles 18* adjacent to the frames 10-1, 10-2 and 10-3, 10-4, are manufactured by cutting the symmetric depth profiles 18 into two halves. Consequently, the depth profile 18* has only one downward angled flange 26 with the end portion 28 to be brought into engagement with the corresponding slits 30 and 56 in the beams 12-2 resp. 12-1. In order to enhance the stability of said depth profiles besides the usage of a locking tongue 78, which is bent down by an angle BA more than 90° (see figure 23), a second embodiment of the outermost depth profiles is described in the following with reference to figures 37 to 42. Again, for simplifying the description, elements which correspond to parts of the described embodiments are designated with similar reference numerals which, however, are headed by a "3".

By using a wider depth profile 318 (e.g. having a width W318 of 170mm instead of 130mm for the regular depth profile 18) for manufacturing the outermost depth profiles adjacent to frames 10-1, 10-2 and 10-3, 10-4, which differs from the depth profile 18 (see figure 17) only with respect to a wider center portion 372 (fig. 37), it is possible to provide a second angled flange 327 for the engagement with the additional vertical slits 331 and 357 in the beams 312-2 resp. 312-1 (figures 38, 42), thus improving the handling when assembling the system and avoiding tilt movement of the mounted depth profile.

By cutting said wider depth profile 318, into which at the center thereof cut-out portions have been punched which correspond to the configuration of the end portions (328) of the other flange 326 (slit and shoulder), into two halves and by bending the center portion 372 parallel to the cutting line CL downwards in the same direction of the other angled flange 326, an additional angled flange is formed so as to increase the stability of engagement between the depth profiles 318* and the beams 312.

In order to have two flanges, which are - below the force transmitting portion, i.e. the center portion 372 - essentially congruent to each other, the distance of the bending line BL from the cutting line CL has to be set as height H327. In other words, the center portion 372 of the wider depth profile 318 has to be wider by two times of the height H327 than the center portion 72 of the regular depth profile 18.

The mounting process of the outermost depth profile 318* is in this embidiment basically the same as the one of the other depth profiles 18. The slits 340, 341 and 351, 352 of the lateral depth profile 318* are brought into engagement with the vertical slits 330, 331 and 356, 357 in the beams 312-2 resp. 312-1. in two steps:

In a first step, the depth profile 318* engages its end portions 328 and 329 of its flanges 326 and 327 in a hook-like manner with the corresponding vertical slits 330 and 331 in the beam 312-2 such that there is a lateral form-fit engagement between end portions 328, 329 and slits 330, 331. The depth profile 318* is inserted until the shoulder 346 abuts the beam 312-2.

After the depth profile is brought in a completely horizontal orientation (dash-dotted lines in Fig. 42), the depth profile 318* can be shifted in a second step in the direction of the arrow L for engaging the other end portions 328 and 329 of the depth profile 318* with the vertical slits 356 and 356 in the beam 321-1. When the depth profile 318* is in the position as illustrated by the through-going lines in figure 42 it can no longer be lifted away from the beams 312-1, 312-2.

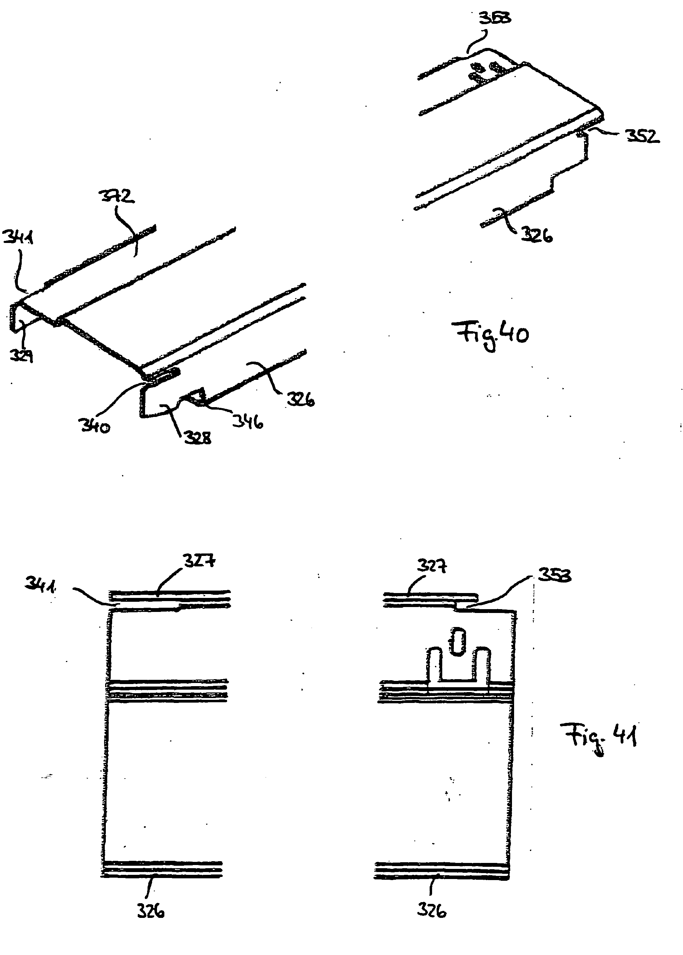

Since the end portion 328 of the angled flange 326 is provided with a widened head portion 338 which enables in a hook-like manner an engagement with the beam 312-2, the end portion 329 of the second angled flange 327 can also have a more simple formed head portion 339 in order to reduce the manufacturing effort (fig. 39a).

Since sufficient stability of the depth profile 318* adjacent to the frames 10 is ensured by the second angled flange 327, there is no need anymore in this embodiment for a locking tongue 78 in the depth profile on the backside of the storage system. Therefore, the mounting process is considerably simplified, as both the depth profile 18 and the lateral depth profile 318* can be mounted from one side of the storage system.

It becomes apparent from the above that the described storage system ensures precise tolerances on manufacturing and erection and at the same time enough flexibility to handle different types of crane handling systems and different types of totes or cartons. In detail, the storage system can be tailored to the individual consumers' needs by selecting the depth profiles and shelves, respectively, which guarantee sufficient strength and at the same time enough flexibility in terms of handling the goods to be stored in the system. The core advantage is to be seen that this individual adaptation of the depth profiles does not change the basic constructional concept of the storage system in which the storage capacity is optimised by adapting the depth profiles to the beams such that the vertical distance of adjacent beams can be fully used for storage purposes.

The beams can be used with standard frames, such as STOW Pal-rack or STOW Midi-Rack frames. Since the same hooks of the standard systems can be welded onto the newly designed beams they are fully compatible with the current systems. By this, adjustability in height, e.g. per 50mm, remains available.

It turned out that the above described design allows the construction of storage systems designed for unit loads of up to 25 kg with beam profiles of around 60 mm height and made of bent sheet metal with a thickness of only 2 mm. The special design of the interconnection between depth profile and beams allows to minimise the required perforations and to thereby provide highest possible strengths. The beams are perforated according to individual needs at a predetermined pitch which corresponds to the crane handling system and the totes to be handled. It is even possible to combine different types of totes in one storage system without changing the mounting procedure.

The specific design of the depth profiles allows that these depth profiles can be applied in single entry as well as double entry installations, which improves the flexibility of assembling the storage system according to the customers' individual needs. The specific interaction between the end portions of the depth profiles and the slits in the beam profiles make sure that the beams do not bulge out when loaded.

The storage system can be built together without any bolts or rivets and nevertheless provides improved stability due to the interaction between the mounted compounds. As the pattern of perforations in the beams is completely flexible towards the system parameters, any possible solution is respect of the storage system criteria as to weight and dimension of the totes as well as with respect to the crane handling system, is feasible.

Of course, modifications of the above embodiments are possible without leaving the scope of the present invention. For example, the vertical force transmission between the depth profile and the beam can be effected through other surfaces of the depth profile. Such surfaces are advantageously formed by depressed or bent-down material portions of the depth profile.

The storage system can be varied in size, height and numbers of storage units in wide ranges without the need of changing the design of its components. The depth profiles can be used for single and double entry systems provided for single or double deep storage of goods.

The position of the shear center of the beam profiles may also be varied, most preferably by adapting it to the plane of the applied external force in such a way that any torsion tendency of the beam under the influence of shear force is counter-acted by the coupling of the pair of beams through the depth profile.

The invention thus provides a storage system made of vertically extending frames, at least a pair of beams which horizontally interconnect a pair of sidewardly adjacent frames each and at least one depth profile which is mountable to said pair of beams so as to horizontally bridge the space between these beams for providing a support for the goods to be stored. The depth profile has a support surface and at least one downwardly angled flange. For providing a maximum of strength while ensuring a simplest possible mounting expenditure the depth profile with its one end portion of its flange is engageable in a hook-like manner with a slit-like recess in one of the beams. The slit and the hook are adapted to each other such that upon insertion of said hook-like designed end portion into said slit-like recess the depth profile is shiftable towards said other beam thereby reaching its final mounting position. In this position the hook-like end portion is caught within said slit-like recess and it is lockable there by bending a locking portion thereof into a corresponding recess of said second beam.

## Claims

1. A storage system coprising
- vertically extending frames (10-1 to 10-4),
- at least a pair of beams (12-1, 12-2; 112-1, 112-2) which horizontally interconnect a pair of sidewardly adjacent frames each and
- at least one depth profile (18; 118; 218) which is mountable to said pair of beams so as to horizontally bridge the space between these beams for providing a support for the goods to be stored, wherein
- said depth profile (18; 118; 218) has a support surface (24) and at least one downwardly angled flange (26; 126; 226) and is designed such that it is detachably mountable to said pair of beams (12-1, 12-2; 112-1, 112-2) by using exclusively the material of said depth profile and/or of said beams, the depth profile being lockable with said pair of beams by form fit engagement allowing a horizontal force coupling between said pair of beams, **characterized in that**
- said depth profile (18; 118; 218) with its one end portion (28, 38; 128, 138; 328) of its flange (26; 126; 226) is engageable in a hook-like manner with a slit-like recess (30; 130; 230) in one of the beams (12-2; 112-2; 212-2),
- the slit (30; 130; 230) and the hook (38; 138; 238) being adapted to each other such that upon insertion of said hook-like designed end portion (28, 38; 128, 138; 328) into said slit-like recess (30; 130; 230) the depth profile is shiftable towards said other beam (12-1; 112-1) thereby reaching its final mounting position in which
- the hook-like end portion (28, 38; 128, 138; 328) is caught within said slit-like recess (30; 130; 230) and
- the depth profile is vertically fixed and is lockable by bending a locking portion (78) thereof into a corresponding recess (80) of said second beam.

2. Storage system according to claim 1, wherein
said slit-like recess (230) in one of the beams (212-2) is provided in a horizontal support surface (242) of said beam.

3. Storage system according to claim 1, wherein
said slit-like recess (30; 130) is provided in a corner portion (32; 132) of said beam (12-2; 112-2) and said depth profile (18; 118) is engageable with said beam (12-2; 112-2) through an end portion (38; 138) of its flange (26; 126) interacting with a vertical slit (30; 130) provided in said corner portion.

4. Storage system according to one of the claims 1 to 3, wherein
said depth profile (18; 118; 218) is engageable with said other beam (12-1; 112-1) of said pair of beams (12-1, 12-2; 112-1, 112-2) through the other end portion of said flange (26; 126; 226) interacting with a vertical slit (56; 156) which is formed into the beam at its corner portion (58) facing the other beam.

5. Storage system according to one of the claims 1 to 4, wherein
said end portions (28) of said flange (26) of said depth profile (18; 118) each comprise a horizontal slit (40, 52; 140, 152) having essentially the width (W40, W52) of the thickness (W42, W60) of the corresponding beam (12-2, 12-1) to be engaged with.

6. Storage system according to one of the claims 1 to 5, wherein
the other end portion of said depth profile (18) is designed such that a face (62) of a cut out portion (52) can be brought into an abutting position with the other beam (60F, 12-1) when the depth profile (18) has reached its final mounting position (Figure 8).

7. Storage system according to claim 6, wherein
said face (62) of said cut out portion is the bottom surface of said horizontal slit (52).

8. Storage system according to one of the claims 1 to 7, **characterized in that**
end portions (28; 128; 228) of said flange (26; 126; 226) of said depth profile each comprise a horizontal slit (40, 52; 140, 152; 240, 252) having essentially the width (W40, W52) of the thickness (W42, W60) of the corresponding beam (12-1, 12-2) to be engaged with;
said depth profile (18; 118; 218;) being supported at its both ends on a horizontal beam surface (42, 60) which lies by a predetermined measure (VD) below the upper edge (60U) of the beam (12-1; 112-1, 112-2) forming an entry of the storage system, wherein
said predetermined measure (VD) is greater than the distance (W52) of said horizontal slit (52) from the uppermost surface (74) of said depth profile (18).

9. Storage system according to one of the claims 1 to 8 in the embodiment of a storage system having
a single entry, wherein
the beam (12-1) at the entry side of the storage system has an essentially closed profile with a stepped upper surface (60, 60U) and
the other beam (12-2) of said pair of beams (12-1, 12-2; 112-1, 112-2) has a profile essentially in the form of a "Z" the upper horizontal leg (42) of which defines a support surface for said depth profile and continues in an upwardly bent rim portion (43) having a length (L43) which is greater than the step (VD) in the upper surface (60, 60U) of the beam (12-1) at the entry side.

10. Storage system according to one of the claims 1 to 8 in the embodiment of a storage system having a double entry, wherein
both beams (112-1, 112-2) have an essentially closed profile with a stepped upper surface (160, 160U) and
the profiles (112-1, 112-2) are arranged symmetrically with respect to a vertical center plane which is parallel to said beams.

11. Storage system according to one of the claims 3 to 10, wherein
said end portion (28; 128) of the flange (26; 126) of the depth profile (18; 118) is in the form of a widened head portion (38; 138) which is adjacent to an essentially horizontal slit (40; 140) and which is fittingly insertable into said vertical slit (30; 130) of the beam (12-2; 112-2) in a tilted position, so that upon insertion and moving (M) of the depth profile into a horizontal mounting position the widened head (38; 138) is secured within said slit (40; 140) against excessive horizontal movement of the depth profile.

12. Storage system according to claim 11, wherein
the widened head (38; 138) has a functional surface (68; 168) which in the final mounting position of the depth profile comes close to a wall portion (48; 166) of the corresponding beam profile (12-2; 112-2).

13. Storage system according to one of the claims 1 to 12, wherein
the design of the depth profile (18; 118; 218) is adapted to the form and location of the corresponding recesses in the beams (12-1, 12-2; 112-1, 112-2) such that the flanges (26; 126; 226) contribute to the force transmission from the depth profile into said beams.

14. Storage system according to one of the claims 1 to 13, wherein
said depth profile (12-1, 12-2; 112-1, 112-2) is symmetrical with respect to a center plane (CP) which in the mounted position is orthogonal to said pair of beams (12-1, 12-2; 112-1, 112-2).

15. Storage system according to one of the claims 1 to 14, wherein
said depth profile (18; 118; 218) has a cross section essentially in the form of a preferably flat "U" in which the two vertical extending flanges (26; 126; 226) are bent down from a main leg (70) which bridges the two flanges (26) and which has a slightly depressed center portion (72) by which the depth profile contacts the upper side (42, 60; 160) of the respective beam.

16. Storage system according to one of the claims 1 to 15, wherein
the flanges (26; 126; 226) of said depth profile have an end portion (27) each which is bent inwardly.

17. Storage system according to one of the claims 9 to 16, wherein
said beams (12-1, 12-2; 112-1, 112-2) have a profile having a shear center lying in a plane (PSC) which lies close to a plane of the resulting support force acting on said depth profile.

18. Storage system according to one of the claims 1 to 17, wherein
said locking portion (78) to be bent into said corresponding recess (80) is formed by a material tongue which results from an essentially U-form cut-out (81) in the profile.

19. Storage system according to claim 18, wherein
said material tongue (78) has a width (W78) which essentially corresponds to that of the recess (80) in said beam (12-1) lying below said tongue (78) when said depth profile is in its final mounting position.

20. Storage system according to claim 18 or 19, wherein
said depth profile (18) adjacent to said material tongue (78) has a hole (79) through which a tool for bending said bent down locking portion (78) back into a position allowing the removal of said depth profile is insertable.

21. Storage system according to one of the claims 1 to 20, comprising a plurality of units consisting of vertically extending frames (10-1 to 10-4), a plurality of pair of beams (12-1, 12-2; 112-1, 112-2) staggered in vertical direction by a predetermined distance (DV) and a plurality of depth profiles (18; 118; 218).

22. Storage system according to claim 21, wherein the depth profiles (18*) adjacent to said frames (14) are made by cutting the depth profiles (18) into two halves.

23. Storage system according to claim 22, wherein the depth profiles (318*) adjacent to said frames (14) are made by cutting the depth profiles (318) into two halves and by bending a part of the center portion (372) parallel to the cutting line by 90° so as to provide a second angled flange (327) with the same direction and a sufficient height (H327) so as to receive the slits (341, 353), which have the same geometry as the slits (340, 352) of the other flange (326) for engaging additional vertical slits (331, 357) in the beams (312-2, 312-1), wherein said depth profile (318), before it is cut into two halves, has a center portion (372) with a width (W372), which is by two times of the height (H327) wider than the width of the center portion (72) of the depth profile (18).

24. Storage system according to claim 23, wherein
the second angled flange (327) has a height (H327) so as to make it essentially congruent with the angled flange (326) on the other side of the depth profile (318*).

25. A beam for a storage system according to one of the claims 1 to 24, said beam having an essentially closed profile with a stepped upper surface (60, 60U) and is made by bending a metal sheet into an essentially rectangular configuration in which the adjacent end portions (69 I, 69 O) lying opposite to said stepped upper surface (60, 60 U) are essentially abutting each other via inwardly bent terminal portions (69 T)

26. A beam for a storage system according to one of the claims 1 to 24, said beam having a profile essentially in the form of a "Z" the upper horizontal leg (42) of which defines a support surface for a depth profile and continues in an upwardly bent rim portion (43).

27. A beam according to claim 25 or 26, comprising a plurality of sidewardy spaced vertical slits (30, 56) in corner portions (32, 58) of the profile adjacent to its respective support surface (42, 60).

28. A beam according to claim 27, comprising recesses (80, 80S) in the area of said slits provided for receiving a locking portion (78) of the depth profile (18) interacting with said corresponding vertical slit (56).

29. A depth profile for a storage system according to one of the claims 1 to 24 to be used with a beam according to one of the claims 24 to 28, said depth profile (18) having a support surface (24) and at least one downwardly angled flange (26), **characterized in that**
- said support surface (24) is divided into a lateral elevated support portion (74) for the goods to be stored and an adjacent force transmitting portion (72) for contacting a beam of the storage system,
- said force transmitting portion (72) being formed by a depression (step 73) of the support surface;
wherein
- end portions of said flange (26) each comprise a slit (40, 52) which is parallel to longitudinal extension of the depth profile and which has essentially the width (W40, W52) of the thickness (W42, W60) of the corresponding beam to be mounted with; and
- an upper edge (52U) of said slit (52) is essentially flush with the lower surface (72L) of said force transmitting portion (72) of the profile.

30. A depth profile according to claim 29, wherein one end portion (28) of said flange (26) of the depth profile is in the form of a widened head portion (38) which is adjacent to said slit (40); wherein
said slit (40) merges into an end face (44) of the flange (26) via a slightly upwardly angled portion (40F).

31. A depth profile according to claim 29 or 30, having a plane of symmetry (CP) in the center of its force transmitting portion (72).

32. A depth profile according to one of the claims 29 to 31, wherein
at least one locking tongue (78) is formed in the force transmitting portion (72), said tongue being formed by an essentially U-form cut-out (81) in the profile.

33. A depth profile according to claim 32, wherein said depth profile (18) adjacent to said material tongue (78) has a hole (79) through which a tool for manipulating said locking tongue after being bent down can be inserted.

34. A depth profile according to one of the claims 29 to 33, wherein
the flange (26) of said depth profile has an end portion (27) which is bent inwardly.

## Patentansprüche

1. Lagersystem mit
- sich vertikal erstreckenden Ständern (10-1 bis 10-4),
- zumindest einem Paar von Querträgern (12-1, 12-2; 112-1, 112-2), welche jeweils horizontal ein Paar von seitlich benachbarten Ständern miteinander verbinden, und
- zumindest ein Tiefenprofil (18; 118; 218), welches an dem Paar von Querträgern derart montierbar ist, dass es den Raum zwischen diesen Querträgern horizontal überbrückt, um ein Auflager für die einzulagernden Güter zu schaffen, wobei
- das Tiefenprofil (18; 118; 218) eine Auflageoberfläche (24) und zumindest einen nach unten abgewinkelten Flansch (26; 126; 226) aufweist und derart gestaltet ist, dass es an dem Paar von Querträgern (12-1, 12-2; 112-1, 112-2) montierbar ist, indem ausschließlich das Material des Tiefenprofils und/oder der Querträger herangezogen wird, wobei das Tiefenprofil mit dem Paar von Querträgern durch formschlüssigen Eingriff derart verriegelbar ist, dass eine Horizontalkraftübertragung zwischen dem Paar von Querträgern ermöglicht ist, **dadurch gekennzeichnet, dass**
- das Tiefenprofil (18; 118; 218;) mit seinem einen Endabschnitt (28, 38; 128, 138; 328) seines Flansches (26; 126; 226) auf eine hakenartige Art und Weise mit einer schlitzartigen Ausnehmung (30; 130; 230) in einem der Querträger (12-2; 112-2; 212) in Eingriff bringbar ist,
- der Schlitz (30; 130; 230) und der Haken (38; 138;238) derart aneinander angepasst sind, dass das Tiefenprofil nach dem Einsetzen des hakenartig gestalteten Endabschnitts (28, 38; 128, 138; 328) in die schlitzartige Ausnehmung (30; 130; 230) in Richtung des anderen Querträgers 12-1; 112-1) verschiebbar ist, wodurch es seine endgültige Montageposition erreicht, in der
- der hakenartige Endabschnitt (128, 138; 328) innerhalb der schlitzartigen Ausnehmung (30, 130; 230) gefangen ist, und
- das Tiefenprofil vertikal fixiert und verriegelbar ist, indem ein Verriegelungsabschnitt (78) in eine entsprechende Ausnehmung (80) des zweiten Querträgers hineinbiegbar ist.

2. Lagersystem nach Anspruch 1, wobei die schlitzartige Ausnehmung (230) in einem der Querträger (212-2) in einer horizontalen Auflageoberfläche (242) des Querträgers vorgesehen ist.

3. Lagersystem nach Anspruch 1, wobei die schlitzartige Ausnehmung (30; 130) an einem Eckenabschnitt (32; 132) des Querträgers (12-2; 112-2) vorgesehen ist und das Tiefenprofil (18; 118) mit dem Querträger (12-2; 112-2) durch einen Endabschnitt (38; 138) seines Flansches (26; 126) in Eingriff bringbar ist, der mit einem vertikalen Schlitz (30; 130) zusammenwirkt ,welcher in dem Eckenabschnitt vorgesehen ist.

4. Lagersystem nach einem der Ansprüche 1 bis 3, wobei das Tiefenprofil (18; 118; 218) mit dem anderen Querträger (12-1; 112-1) des Querträger-Paares (12-1, 12-2; 112-1, 112-2) durch den anderen Endabschnitt des Flansches (26; 126; 226) in Eingriff bringbar ist, wobei der andere Endabschnitt des Flansches mit einem vertikalen Schlitz (56; 156) zusammenwirkt, der im Querträger an dessen Eckenabschnitt (58) ausgebildet ist, welcher auf den anderen Querträger zu weist.

5. Lagersystem nach einem der Ansprüche 1 bis 4, wobei die Endabschnitte (28) des Flansches (26) des Tiefenprofils (18; 118) jeweils einen horizontalen Schlitz (40, 52; 140, 152) aufweisen, der im Wesentlichen die Weite (W40, W52) der Dicke bzw. Wandstärke (W42, W60) des zugeordneten Querträgers (12-2, 12-1) hat, mit einem Eingriff herstellbar sein soll.

6. Lagersystem nach einem der Ansprüche 1 bis 5, wobei der andere Endabschnitt des Tiefenprofils (18) derart gestaltet ist, dass eine Stirnfläche (62) eines aufgeschnittenen Abschnitts(52) in Anschlagstellung mit dem anderen Querträger (60F, 12-1) bringbar ist, wenn das Tiefenprofil (18) seine endgültige Montageposition (Figur 8) erreicht hat.

7. Lagersystem nach Anspruch 6, wobei die Stirnfläche (62) des ausgeschnittenen Abschnitts die Grundoberfläche des horizontalen Schlitzes (52) darstellt.

8. Lagersystem nach einem der Ansprüche 1 bis 7,
**dadurch gekennzeichnet, dass**
Endabschnitte (28; 128; 228) des Flansches (26; 126; 226) des Tiefenprofils jeweils einen horizontalen Schlitz (40, 52; 140, 152; 240, 252) aufweisen, der im Wesentlichen die Weite (W40, W52) der Materialstärke (W42, W60) des zugehörigen Querträgers (12-1, 12-2) hat, mit dem ein Eingriff herzustellen ist; und
das Tiefenprofil (18; 118; 218) an seinen beiden Enden auf einer horizontalen Querträgeroberfläche (42, 60) getragen ist, welche um ein vorbestimmtes Maß (VD) unterhalb des oberen Randes (60U) desjenigen Querträgers (12-1; 112-1, 112-2) liegt, der einen Beschickungseingang des Lagersystems bildet, wobei
das vorbestimmte Maß (VD) größer ist als der Abstand (W52) des horizontalen Schlitzes (52) von der obersten Oberfläche (74) des Tiefenprofils (18).

9. Lagersystem nach einem der Ansprüche 1 bis 8 in der Ausgestaltung eines Systems mit einer einzigen Beschickungsöffnung, wobei
der Querträger (12-1) an der Beschickungseingangsseite des Lagersystems ein im Wesentlichen geschlossenes Profil mit einer abgestuften oberen Oberfläche (69, 60U) hat, und
der andere Querträger (12-2) des Querträger-Paares (12-1, 12-2; 112-1, 112-2) ein Profil im Wesentlichen in der Form eines "Z" hat, dessen oberer horizontaler Schenkel (42) eine Auflageroberfläche für das Tiefenprofil definiert und in einen nach oben abgebogenen Randabschnitt (43) übergeht, der eine Länge (L43) hat, welche größer ist als die Stufe (VD) in der oberen Oberfläche (60U) des Querträgers (12-1) an der Beschickungseingangsseite.

10. Lagersystem nach einem der Ansprüche 1 bis 8 in der Ausgestaltung als Lagersystem mit doppelseitiger Beschikkung, wobei
beide Querträger (112-1, 112-2) ein im Wesentlichen geschlossenes Profil mit einer abgestuften oberen Oberfläche (160, 160U) haben, und
die Profile (112-1, 112-2) symmetrisch bezüglich einer vertikalen Mittelebene angeordnet sind, die parallel zu den Querträgern verläuft.

11. Lagersystem nach einem der Ansprüche 3 bis 10, wobei
der Endabschnitt (28; 128) des Flansches (26; 126) des Tiefenprofils (18; 118) die Form eines sich verbreiternden Kopfabschnitts (38; 138) hat, welcher einem im Wesentlichen horizontalen Schlitz (40; 140) benachbart und in den vertikalen Schlitz (30; 130) des Querträgers (12-2; 112-2) in einer gekippten Position mit Passung einsetzbar ist, so dass nach dem Einsetzen und dem Bewegen (M) des Tiefenprofils in eine horizontale Montageposition der verbreiterte Kopf (38; 138) innerhalb des Schlitzes (40; 140) gegen eine übermäßige horizontale Bewegung des Tiefenprofils gesichert ist.

12. Lagersystem nach Anspruch 11, wobei der verbreiterte Kopf (38; 138) eine Funktionsoberfläche (68; 168) aufweist, welche in der endgültigen Montageposition des Tiefenprofils einem Wandabschnitt (48; 166) des zugehörigen Trägerprofils (12-2; 112-2) nahe kommt.

13. Lagersystem nach einem der Ansprüche 1 bis 12, wobei die Gestaltung des Tiefenprofils (18; 118; 218) an die Form und Lage der entsprechenden Ausnehmungen in den Querträgern (12-1, 12-2; 112-1, 112-2) derart angepasst ist, dass die Flansche (26; 126; 226) zur Kraftübertragung vom Tiefenprofil in die Querträger beitragen.

14. Lagersystem nach einem der Ansprüche 1 bis 13, wobei das Tiefenprofil (12-1, 12-2; 112-1, 112-2) symmetrisch bezüglich einer Mittelebene (CP) ist, welche in der Montageposition senkrecht auf dem Paar von Querträgern (12-1, 12-2; 112-1, 112-2) steht.

15. Lagersystem nach einem der Ansprüche 1 bis 14, wobei das Tiefenprofil (18; 118; 218) einen Querschnitt im Wesentlichen in der Form eines bevorzugterweise flachen "U" hat, bei dem die beiden sich vertikal erstreckenden Flansche (26; 126; 226) von einem Hauptschenkel (70) nach unten gebogen sind, welcher die beiden Flansche (26) überbrückt und der einen leicht tiefer gelegten bzw. nach unten gedrückten Mittelabschnitt (72) aufweist, über den das Tiefenprofil die obere Seite (42, 60; 160) des betreffenden Querträgers berührt.

16. Lagersystem nach einem der Ansprüche 1 bis 15, wobei die Flansche (26; 126, 226) des Tiefenprofils einen Endabschnitt (27) haben, der jeweils nach innen abgewinkelt ist.

17. Lagersystem nach einem der Ansprüche 9 bis 16, bei dem die Querträger (12-1, 12-2; 112-1, 112-2) ein Profil mit einem Schubmittelpunkt haben, welcher in einer Ebene(PSC) liegt, die ihrerseits nahe einer Ebene der resultierenden, auf das Tiefenprofil einwirkenden Auflagerkraft liegt.

18. Lagersystem nach einem der Ansprüche 1 bis 17, bei dem der in die entsprechende Ausnehmung (80) hineinzubiegende Verriegelungsabschnitt (78) durch eine Materialzunge gebildet wird, die sich durch eine im Wesentlichen U-förmige Ausklinkung bzw. Ausstanzung (81) im Profil ergibt.

19. Lagersystem nach Anspruch 18, bei dem die Materialzunge (78) eine Weite (W78) hat, die im Wesentlichen derjenigen der im Querträger (12-1) vorgesehenen Ausnehmung (80) entspricht, welche unterhalb der Zunge (78) zu liegen kommt, wenn das Tiefenprofil sich in seiner endgültigen Montageposition befindet.

20. Lagersystem nach Anspruch 18 oder 19, bei dem das der Materialzunge (78) benachbarte Tiefenprofil (18) ein Loch (79) hat, durch welches ein Werkzeug zum Zurückbiegen des nach unten gebogenen Verriegelungsabschnitts (78) in eine Position einführbar ist, welche das Entfernen des Tiefenprofils erlaubt.

21. Lagersystem nach einem der Ansprüche 1 bis 20, mit einer Vielzahl von Einheiten, welche von sich vertikal erstreckenden Stützen bzw. Ständern (10-1 bis 10-4), von einer Vielzahl von Querträger-Paaren (12-1, 12-2; 112-1, 112-2), die um einen vorbestimmten Abstand (DV) in vertikaler Richtung gestaffelt sind, und von einer Vielzahl von Tiefenprofilen (18; 118; 218) bestehen.

22. Lagersystem nach Anspruch 21, bei dem die den Ständern (14) benachbarten Tiefenprofile (18*) **dadurch** hergestellt sind, dass die Tiefenprofile (18) in zwei Hälften zerschnitten bzw. zerteilt werden.

23. Lagersystem nach Anspruch 22, bei dem die den Ständern (14) benachbarten Tiefenprofile (318) **dadurch** herstellbar sind, dass die Tiefenprofile (318) in zwei Hälften zerteilt und ein Teil des Mittelabschnitts (372) parallel zu der Teil- bzw. Schnittlinie um 90° umgebogen wird, so dass ein zweiter abgewinkelter Flansch (327) mit der selben Richtung und einer ausreichenden Höhe (H327) zur Aufnahme der Schlitze (341, 353) bereitgestellt wird, welche dieselbe Geometrie wie die Schlitze (340), 352) des anderen Flansches (326) für den Funktionseingriff mit zusätzlichen vertikalen Schlitzen (331, 357) in den Querträgern (312-2, 312-1) haben, wobei das Tiefenprofil (318) vor der Unterteilung in seine zwei Hälften einen Mittelabschnitt (372) mit einer Breite (W372) hat, die um das Doppelte der Höhe (H327) breiter ist als die Breite des Mittelabschnitts (72) des Tiefenprofils (18).

24. Lagersystem nach Anspruch 23, bei dem der zweite abgewickelte Flansch (327) eine solche Höhe (H327) hat, dass er im Wesentlichen kongruent mit dem abgewickelten Flansch (326) auf der anderen Seiten des Tiefenprofils (318*) wird.

25. Querträger für ein Lagersystem nach einem der Ansprüche 1 bis 24, wobei der Querträger im Wesentlichen ein geschlossenes Profil mit einer abgestuften oberen Oberfläche (60, 60U) hat und durch Biegeverformung eines Metallblechs in eine im Wesentlichen rechteckförmige Konfiguration herstellbar ist, bei der die benachbarten Endabschnitte (69I, 690) der abgestuften oberen Oberfläche (60, 60U) gegenüberliegen und sich im Wesentlichen über nach innen gebogene Endabschnitte (69T) stumpf berühren.

26. Querträger für ein Lagersystem nach einem der Ansprüche 1 bis 24, wobei der Querträger ein Profil im Wesentlichen in der Form eines "Z" hat, dessen oberer horizontaler Schenkel (42) eine Auflageoberfläche für ein Tiefenprofil definiert und in einem nach oben gebogenen Randabschnitt (43) übergeht.

27. Querträger nach Anspruch 25 oder 26, mit einer Vielzahl von im Seitenabstand zueinander stehenden Vertikalschlitzen (30, 56) in Profil-Eckabschnitten (32, 58), welche der jeweiligen Auflageoberfläche (42, 60) benachbart sind.

28. Querträger nach Anspruch 27, mit Ausnehmungen (80, 80S) im Bereich der Schlitze, wobei die Ausnehmungen vorgesehen sind, um einen Verriegelungsabschnitt (78) des Tiefenprofils (18) aufzunehmen, welches mit dem zugehörigen vertikalen Schlitz (56) zusammenwirkt.

29. Tiefenprofil für ein Lagersystem nach einem der Ansprüche 1 bis 24 zur Verwendung mit einem Querträger nach einem der Ansprüche 24 bis 28, wobei das Tiefenprofil (18) eine Auflageoberfläche (24) und zumindest einen nach unten abgewinkelten Flansch (26) aufweist, **dadurch gekennzeichnet, dass**
- die Auflageoberfläche (24) in einen seitlichen, erhabenen Auflageabschnitt (74) für die einzulagernden Güter und einen sich daran anschließenden Kraftübertragungsabschnitt (72) für die Auflage auf einem Querträger des Lagersystems unterteilt ist,
- der Kraftübertragungsabschnitt (72) durch eine Eindrückung (Stufe 73) der Auflageoberfläche gebildet ist; wobei
- Endabschnitte des Flansches (26) jeweils einen Schlitz (40, 52) aufweisen, der parallel zur Längserstreckung des Tiefenprofils ausgerichtet ist und im Wesentlichen die Weite (W40, W52) der Materialstärke (W42, W60) des entsprechenden Querträgers hat, an dem er montiert werden soll; und dass
- eine obere Kante (52U) des Schlitzes (52) im Wesentlichen bündig mit der unteren Oberfläche (72L) des Kraftübertragungsabschnitts (72) des Profils ist.

30. Tiefenprofil nach Anspruch 29, bei dem
ein Endabschnitt (28) des Flansches (26) des Tiefenprofils die Form eines sich verbreiternden Kopfabschnitts (38) hat, der dem Schlitz (40) benachbart ist; wobei
der Schlitz (40) über einen leicht nach oben abgewinkelten Abschnitt (40F) in eine Stirnfläche (44) des Flansches (26) übergeht.

31. Tiefenprofil nach Anspruch 29 oder 30, mit einer Symmetrieebene (CP) im Zentrum seines Kraftübertragungsabschnitts (72).

32. Tiefenprofil nach einem der Ansprüche 29 bis 31, bei dem im Kraftübertragungsabschnitt (72) zumindest eine Verriegelungszunge (78) ausgebildet ist, die durch eine im Wesentlichen U-förmige Ausklinkung bzw. Ausstanzung (81) im Profil gebildet ist.

33. Tiefenprofil nach Anspruch 32, bei dem das Tiefenprofil (18) in der Nähe der Materialzunge (78) ein Loch (79) hat, durch welches ein Werkzeug zur Handhabung der Verriegelungszunge nach deren Abwinkelung nach unten einsetzbar ist.

34. Tiefenprofil nach einem der Ansprüche 29 bis 33, bei dem der Flansch (26) des Tiefenprofils einen nach innen gebogenen Endabschnitt (27) hat.

## Revendications

1. Système de stockage comprenant :
- des structures (10-1 à 10-4) s'étendant verticalement,
- au moins une paire de poutres (12-1, 12-2 ; 112-1, 112-2) qui interconnectent horizontalement une paire de structures chacune adjacente latéralement et
- au moins un profil de profondeur (18 ; 118 ; 218) qui peut être monté sur ladite paire de poutres afin de combler horizontalement l'espace entre ces poutres afin de fournir un support pour les biens devant être stockés, dans lequel
- ledit profil de profondeur (18 ; 118 ; 218) a une surface de support (24) et au moins une collerette (26 ; 126 ; 226) inclinée vers le bas et est conçu de telle manière qu'il peut être monté de manière détachable sur ladite paire de poutres (12-1, 12-2 ; 112-1, 112-2) en utilisant exclusivement le matériau dudit profil de profondeur et/ou desdites poutres, le profil de profondeur étant verrouillable avec ladite paire de poutres par un engagement par ajustement de forme autorisant un couplage de forces horizontales entre ladite paire de poutres, **caractérisé en ce que**
- ledit profil de profondeur (18 ; 118 ; 218) avec sa portion d'extrémité (28, 38 ; 128, 138 ; 328) de sa collerette (26 ; 126 ; 226) peut s'engager à la manière d'un crochet avec un logement en fente (30 ; 130 ; 230) dans une des poutres (12-2 ; 112-2, 212-2),
- la fente (30 ; 130 ; 230) et le crochet (38 ; 138 ; 238) étant adaptés l'un à l'autre de telle manière que lors d'une insertion de ladite portion d'extrémité (28, 38 ; 128, 138 ; 328) conçue en crochet dans ledit logement en fente (30 ; 130 ; 230), le profil de profondeur peut être décalé vers ladite autre poutre (12-1 ; 112-1) atteignant ainsi sa position finale de montage, dans laquelle
- la portion d'extrémité (28, 38 ; 128, 138 ; 328) en crochet est coincée à l'intérieur dudit logement en fente (30 ; 130 ; 230) et
- le profil de profondeur est fixé verticalement et est verrouillable en courbant une portion (78) de verrouillage de ce dernier dans un logement correspondant (80) de ladite seconde poutre.

2. Système de stockage selon la revendication 1, dans lequel
ledit logement en fente (230) dans une des poutres (212-2) est prévu sur une surface de support horizontal (242) de ladite poutre.

3. Système de stockage selon la revendication 1, dans lequel
ledit logement en fente (30 ; 130) est prévu dans une portion de coin (32 ; 132) de ladite poutre (12-2 ; 112-2) et ledit profil de profondeur (18 ; 118) peut s'engager avec ladite poutre (12-2 ; 112-2) grâce à une portion d'extrémité (38 ; 138) et à sa collerette (26 ; 126) interagissant avec une fente verticale (30 ; 130) prévue dans ladite portion de coin.

4. Système de stockage selon l'une quelconque des revendications 1 à 3, dans lequel
ledit profil de profondeur (18 ; 118 ; 218) peut s'engager avec ladite autre poutre (12-1, 112-1) de ladite paire de poutres (12-1, 12-2 ; 112-1, 112-2) grâce à l'autre portion d'extrémité de ladite collerette (26 ; 126 ; 226) interagissant avec une fente verticale (56 ; 156) qui est formée dans la poutre au niveau de sa portion (58) de coin faisant face à l'autre poutre.

5. Système de stockage selon l'une des revendications 1 à 4, dans lequel
lesdites portions d'extrémité (28) de ladite collerette (26) dudit profil de profondeur (18 ; 118), comprennent chacune une fente horizontale (40, 52 ; 140, 152) ayant essentiellement la largeur (W40, W52) de l'épaisseur (W42, W60) de la poutre correspondante (12-2, 12-1) avec laquelle elles doivent s'engager.

6. Système de stockage selon l'une des revendications 1 à 5, dans lequel
l'autre portion d'extrémité dudit profil de profondeur (18) est conçue de telle manière qu'une face (62) d'une portion de découpe (52) peut être amenée à une position d'appui avec l'autre poutre (60F, 12-1), lorsque le profil de profondeur (18) a atteint sa position finale de montage (figure 8).

7. Système de stockage selon la revendication 6, dans lequel
ladite face (62) de ladite portion de découpe est la surface de fond de ladite fente horizontale (52).

8. Système de stockage selon l'une des revendications 1 à 7, **caractérisé en ce que**
des portions d'extrémité (28 ; 128, 228) de ladite collerette (26 ; 126 ; 226) dudit profil de profondeur comprennent chacune une fente horizontale (40, 52 ; 140, 152 ; 240, 252) ayant essentiellement la largeur (W40, W52) de l'épaisseur (W42, W60) de la poutre correspondante (12-1, 12-2) avec lesquelles elles doivent s'engager ;
ledit profil de profondeur (18 ; 118 ; 218) étant supporté, au niveau de ses deux extrémités, sur une surface (42, 60) de poutre horizontale qui s'étend d'une distance prédéterminée (VD) au-dessous du bord supérieur (60U) de la poutre (12-1 ; 112-1, 112-2) formant une entrée du système de stockage, dans lequel
ladite distance prédéterminée (VD) est plus grande que la distance (W52) de ladite fente horizontale (52) depuis la surface extrême supérieure (74) dudit profil de profondeur (18).

9. Système de stockage selon l'une des revendications 1 à 8 dans le mode de réalisation d'un système de stockage ayant
une entrée unique, dans laquelle
la poutre (12-1) au niveau du côté d'entrée du système de stockage a un profil sensiblement fermé avec une surface supérieure échelonnée (60, 60U) et
l'autre poutre (12-2) de ladite paire de poutres (12-1, 12-2 ; 112-1, 112-2) a un profil essentiellement en forme de "Z", dont la patte horizontale supérieure (42) définit une surface de support pour ledit profil de profondeur et se poursuit en une portion (43) de rebord courbé vers le haut ayant une longueur (L43) qui est plus grande que l'échelon (VD) de la surface supérieure (60, 60U) de la poutre (12-1) au niveau du côté d'entrée.

10. Système de stockage selon l'une des revendications 1 à 8 dans le mode de réalisation d'un système de stockage ayant une double entrée, dans laquelle
les deux poutres (112-1, 112-2) ont un profil essentiellement fermé avec une surface supérieure échelonnée (160, 160U) et
les profils (112-1, 112-2) sont agencés symétriquement par rapport à un plan central vertical qui est parallèle auxdites poutres.

11. Système de stockage selon l'une des revendications 3 à 10, dans lequel
ladite portion d'extrémité (28 ; 128) de la collerette (26 ; 126) du profil de profondeur (18 ; 118) a la forme d'une portion à tête élargie (38 ; 138) qui est adjacente à une fente (40 ; 140) essentiellement horizontale et qui peut être insérée de manière ajustée dans ladite fente verticale (30 ; 130) de la poutre (12-2 ; 112-2) dans une position inclinée, de sorte que lors d'une insertion et d'un déplacement (M) du profil de profondeur dans une position de montage horizontale, la tête élargie (38 ; 138) est solidement fixée à l'intérieur de ladite fente (40 ; 140) contre un déplacement horizontal excessif du profil de profondeur.

12. Système de stockage selon la revendication 11, dans lequel
la tête élargie (38 ; 138) a une surface fonctionnelle (68 ; 168) qui, dans la position finale de montage du profil de profondeur, s'approche d'une portion (48 ; 166) de paroi du profil de poutre (12-2 ; 112-2) correspondante.

13. Système de stockage selon l'une des revendications 1 à 12, dans lequel
la conception du profil de profondeur (18 ; 118 ; 218) est adaptée à la forme et l'emplacement des logements correspondants dans les poutres (12-1, 12-2 ; 112-1, 112-2) de telle manière que les collerettes (26 ; 126 ; 226) contribuent à la transmission d'une force depuis le profil de profondeur dans lesdites poutres.

14. Système de stockage selon l'une des revendications 1 à 13, dans lequel
ledit profil de profondeur (12-1, 12-2 ; 112-1, 112-2) est symétrique par rapport au plan central (CP) qui, dans la position montée, est orthogonal à ladite paire de poutres (12-1, 12-2 ; 112-1, 112-2).

15. Système de stockage selon l'une des revendications 1 à 14, dans lequel
ledit profil de profondeur (18 ; 118 ; 218) a une section transversale essentiellement en forme de "U" de préférence plat dans lequel les deux collerettes (26 ; 126 ; 226) s'étendant verticalement sont courbées vers le bas depuis une patte principale (70) qui comble les deux collerettes (26) et qui a une portion centrale (72) légèrement en creux avec laquelle le profil de profondeur entre en contact avec le côté supérieur (42, 60 ; 160) de la poutre respective.

16. Système de stockage selon l'une des revendications 1 à 15, dans lequel
les collerettes (26 ; 126 ; 226) dudit profil de profondeur ont une portion (27) d'extrémité, chacune étant courbée vers l'intérieur.

17. Système de stockage selon l'une des revendications 9 à 16, dans lequel
lesdites poutres (12-1, 12-2 ; 112-1, 112-2) ont un profil ayant un centre de cisaillement s'étendant dans un plan (PSC) qui s'étend près d'un plan de la force de support résultante agissant sur ledit profil de profondeur.

18. Système de stockage selon l'une des revendications 1 à 17, dans lequel
ladite portion de verrouillage (78) devant être courbée dans ledit logement correspondant (80) est formée d'une languette matérielle qui résulte d'une découpe (81) de forme essentiellement en U dans le profil.

19. Système de stockage selon la revendication 18, dans lequel ladite languette matérielle (78) a une largeur (W78) qui correspond essentiellement à celle du logement (80) dans ladite poutre (12-1) s'étendant au-dessous de ladite languette (78) lorsque ledit profil de profondeur est dans sa position finale de montage.

20. Système de stockage selon la revendication 18 ou 19, dans lequel
ledit profil de profondeur (18) adjacent à ladite languette matérielle (78) a un trou (79) au travers duquel peut être inséré un outil destiné à recourber ladite portion de verrouillage (78) vers le bas dans une position autorisant le retrait dudit profil de profondeur.

21. Système de stockage selon l'une des revendications 1 à 20, comprenant une pluralité d'unités composées de structures (10-1 à 10-4) s'étendant verticalement, une pluralité de paires de poutres (12-1, 12-2 ; 112-1, 112-2) étagées dans des directions verticales d'une distance prédéterminée (DV) et une pluralité de profils de profondeur (18 ; 118 ; 218).

22. Système de stockage selon la revendication 21, dans lequel les profils de profondeur (18*) adjacents auxdites structures (14) sont réalisés en coupant les profils de profondeur (18) en deux moitiés.

23. Système de stockage selon la revendication 22, dans lequel les profils de profondeur (318*) adjacents auxdites structures (14) sont réalisés en coupant les profils de profondeur (318) en deux moitiés et en courbant une partie de la portion centrale (372) parallèle à la ligne de coupe, selon un angle de 90° afin de fournir une seconde collerette inclinée (327) avec la même direction et une hauteur (H327) suffisante afin de recevoir les fentes (341, 353), qui ont la même géométrie que les fentes (340, 352) de l'autre collerette (326) afin d'engager des fentes verticales (331, 357) supplémentaires dans les poutres (312-2, 312-1), dans lesquelles ledit profil de profondeur (318), avant d'être coupé en deux moitiés, a une portion centrale (372) avec une largeur (W372), qui est plus large de deux fois la hauteur (H327) que la largeur de la portion centrale (72) du profil de profondeur (18).

24. Système de stockage selon la revendication 23, dans lequel ladite seconde collerette inclinée (327) a une hauteur (H327) destinée à la rendre sensiblement congruente avec la collerette inclinée (326) sur l'autre côté du profil de profondeur (318*).

25. Poutre destiné à un système de stockage selon l'une des revendications 1 à 24, ladite poutre ayant un profil essentiellement fermé avec une surface supérieure échelonnée (60, 60U) et qui est faite en courbant une feuille de métal selon une configuration essentiellement rectangulaire dans laquelle les portions (69I, 690) d'extrémité adjacentes s'étendant en opposition à ladite surface supérieure échelonnée (60, 60U) sont essentiellement en appui entre elles par le biais de portions terminales (69T) courbées vers l'intérieur.

26. Poutre destinée à un système de stockage selon l'une des revendications 1 à 24, ladite poutre ayant un profil essentiellement en forme de "Z", dont la patte horizontale supérieure (42) définit une surface de support pour un profil de profondeur et continue en une portion (43) de rebord courbé vers le haut.

27. Poutre selon la revendication 25 ou 26, comprenant une pluralité de fentes verticales (30, 56) espacées latéralement dans des portions de coin (32, 58) du profil adjacent à sa surface de support (42, 60) respective.

28. Poutre selon la revendication 27, comprenant des logements (80, 80S) dans la zone desdites fentes prévus pour recevoir une portion de verrouillage (78) du profil de profondeur (18) interagissant avec ladite fente verticale (56) correspondante.

29. Profil de profondeur destiné à un système de stockage selon l'une des revendications 1 à 24 devant être utilisé avec une poutre selon l'une des revendications 24 à 28, ledit profil de profondeur (18) ayant une surface de support (24) et au moins une collerette (26) inclinée vers le bas, **caractérisé en ce que**
- ladite surface de support (24) est divisée en une portion de support latéral (74) élevé pour les biens devant être stockés et une portion de transmission de force (72) adjacente destinée à entrer en contact avec une poutre du système de stockage,
- ladite portion de transmission de force (72) étant formée par un enfoncement (étape 73) de la surface de support ; dans laquelle
- des portions d'extrémité de ladite collerette (26) comprennent chacune une fente (40, 52) qui est parallèle à une extension longitudinale du profil de profondeur et qui a essentiellement la largeur (W40, W52) de l'épaisseur (W42, W60) de la poutre correspondante avec laquelle elles doivent être montées ; et
- un bord supérieur (52U) de ladite fente (52) est essentiellement à un niveau avec la surface inférieure (72L) de ladite portion de transmission de force (72) du profil.

30. Profil de profondeur selon la revendication 29, dans lequel une portion d'extrémité (28) de ladite collerette (26) du profil de profondeur a la forme d'une portion à tête élargie (38) qui est adjacente à ladite fente (40) ; dans laquelle
ladite fente (40) fusionne en une face d'extrémité (44) de la collerette (26) par le biais d'une portion (40F) légèrement inclinée vers le haut.

31. Profil de profondeur selon la revendication 29 ou 30, ayant un plan de symétrie (CP) au centre de sa portion de transmission de force (72).

32. Profil de profondeur selon l'une des revendications 29 à 31, dans lequel
au moins une languette de verrouillage (78) est formée dans la portion de transmission de force (72), ladite languette étant formée par une découpe (81) essentiellement en U dans le profil.

33. Profil de profondeur selon la revendication 32, dans lequel
ledit profil de profondeur (18) adjacent à ladite languette matérielle (78) a un trou (79) au travers duquel peut être inséré un outil destiné à manipuler ladite languette de verrouillage, après qu'elle a été courbée vers le bas.

34. Profil de profondeur selon l'une des revendications 29 à 33, dans lequel
la collerette (26) dudit profil de profondeur a une portion d'extrémité (27) qui est courbée vers l'intérieur.
